(19) Europäisches Patentamt
European Patent Office
Office européen des brevets

(11) **EP 2 796 724 B1**

(12) **EUROPÄISCHE PATENTSCHRIFT**

(45) Veröffentlichungstag und Bekanntmachung des Hinweises auf die Patenterteilung:
**17.02.2016 Patentblatt 2016/07**

(51) Int Cl.:
*F04D 15/00* *(2006.01)*     *F04D 15/02* *(2006.01)*
*E03F 5/22* *(2006.01)*     *F04B 49/20* *(2006.01)*
*G05D 9/12* *(2006.01)*     *G05B 13/02* *(2006.01)*

(21) Anmeldenummer: **14001022.4**

(22) Anmeldetag: **20.03.2014**

(54) **Optimierter Betrieb einer drehzahlgeregelten Pumpe in einer Abwasser-Pumpstation**

Optimised operation of a variable speed pump in a waste water pumping station

Fonctionnement optimisé d'une pompe à vitesse variable dans une station de pompage des eaux usées

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2013 DE 102013007026**

(43) Veröffentlichungstag der Anmeldung:
**29.10.2014 Patentblatt 2014/44**

(73) Patentinhaber: **WILO SE**
**44263 Dortmund (DE)**

(72) Erfinder:
 • **Schwarz, Martin**
  **44267 Dortmund (DE)**
 • **Große-Westhoff, Edgar**
  **59269 Beckum (DE)**
 • **Fricke, Alexander**
  **18059 Rostock (DE)**
 • **Eckstädt, Hartmut**
  **18198 Kritzmow (DE)**
 • **Neymeyr, Klaus**
  **18184 Roggentin (DE)**

(74) Vertreter: **Cohausz Hannig Borkowski Wißgott Patent- und Rechtsanwaltskanzlei**
**Schumannstrasse 97-99**
**40237 Düsseldorf (DE)**

(56) Entgegenhaltungen:
**WO-A1-2005/088134**     **WO-A1-2006/019352**
**US-A- 5 742 500**

EP 2 796 724 B1

**Beschreibung**

Die Erfindung betrifft ein Verfahren zum Betreiben einer Pumpstation, insbesondere einer Abwasserpumpstation, welche einen Pumpensumpf mit wenigstens einem Zulauf und wenigstens einem Ablauf und zumindest eine in diesem Pumpensumpf angeordnete, in ihrer Drehzahl regelbare Pumpe umfasst.

Abwasserpumpstationen bilden Zwischensammler, in die das Abwasser über einen oder auch mehrere Zuläufe hineinfließt. Der Zulauf bzw. die Zuläufe sind Abwasserkanäle der Abwasserentsorgung. Je nach Größe dieses Zwischensammlers, auch Pumpensumpf genannt, umfasst dieser eine oder mehrere Pumpen, die das Abwasser aus dem Sammler in eine geodätisch höher gelegene Ablaufleitung pumpen. Diese Ablaufleitung kann ebenfalls ein Abwasserkanal des Kanalnetzes sein und beispielsweise in einen nächsten Zwischensammler führen oder in der Art einer Pipeline direkt zu einer Wasseraufbereitungsanlage führen.

Die Pumpen in derartigen Abwasserpumpstationen werden heutzutage überwiegend ungeregelt bzw. mittels Zweipunktregelung betrieben, bei der die Pumpe lediglich zyklisch oder nach Bedarf an und ausgeschaltet wird. Die Aktivierung und Deaktivierung erfolgt in Abhängigkeit des Pegelstandes im Pumpensumpf beispielsweise gesteuert über einen Schwimmer. Häufige Ein-Aus-Wechsel führen jedoch zu einem erhöhten Verschleiß der Pumpenaggregate.

Es sind jedoch auch Pumpstationen bekannt, deren Pumpen Frequenzumformer zur Drehzahlregelung besitzen, so dass die Pumpe bedarfsgerecht geregelt werden kann. Energieeinsparungen durch Drehzahlregelung von ca. 18-51% bzw. Energieeinsparung mit Drehzahlregelung und übergeordneter Steuerung von 31-64% sind im Vergleich zur Zweipunktregelung je nach betrachtetem Szenario möglich. Die WO 2005/088134 A1 beschreibt ein Verfahren zur Regelung einer Pumpstation, bei dem die Drehzahl der Pumpe im Hinblick auf die Füllstandshöhe im Pumpensumpf energetisch optimal gewählt wird. Dies gilt jedoch nur für den aktuellen Zeitpunkt. Im Hinblick auf einen zukünftigen Betriebsverlauf ist die in WO 2005/088134 A1 dargestellte Betriebsweise nicht energetisch optimal.

Die US 5742500 A offenbart ein Verfahren zum Betrieb einer Abwasserpumpstation, bei dem aus abgespeicherten Zuflusswerten eine Prognose für einen zu erwartenden Wassermengenzufluss in den Sumpf über einen zukünftigen Zeitraum bestimmt wird (Spalte 8, Zeilen 50-62). Die Prognose ruht auf der Periodizität des Zuflusses und wird zur Abschätzung von zukünftigen Kosten verwendet. Des Weiteren wird die Pumpendrehzahl optimiert (Spalte 12, Zeile 53 bis Spalte 14, Zeile 3), jedoch nur in Abhängigkeit des gegenwärtigen Pegelstandes, und ohne explizite Verwendung eines numerischen Optimierungsverfahrens.

Im Hinblick auf den Energieverbrauch des Pumpenaggregates ist festzustellen, dass der Anteil der Energiekosten an den Lebenszykluskosten bei Abwasserpumpen sowohl bei niedriger als auch bei hoher Betriebszeit mit ca. 40% bis ca. 80% Energiekosten sehr hoch ist. Auch hinsichtlich des Pumpenverschleißes wird in der Regel kein optimaler Betrieb erreicht. So führen beispielsweise starke Beschleunigungsvorgänge oder der Betrieb der Pumpe bei hohen Drehzahlen während das zu fördernde Medium stark Stückgut behaftet ist, zu einem erhöhten Verschleiß an Laufrad und Lagern der Pumpe, zumal die starken Beschleunigungsvorgänge und/ oder hohen Drehzahlen nicht unbedingt notwendig wären. Ein weiterer Aspekt ist die Konzentration korrosiver Stoffe im Abwasser, welche vergleichsweise hoch sein und der Pumpe schaden könnte. Hier wäre eine schnelle und nahezu vollständige Förderung des Abwassers aus dem Pumpensumpf heraus sinnvoll. Ist jedoch der Pumpensumpf halb leer, würde die Pumpe -wenn überhaupt- nur mit geringer Drehzahl betrieben werden, so das Pumpenaggregat unnötig lange der korrosiven Stoffe ausgesetzt ist.

Es ist Aufgabe der Erfindung ein Verfahren zum Betreiben einer Pumpstation, beispielsweise einer Abwasserpumpstation, das im Vergleich zum Stand der Technik eine weiter optimierte Betriebsweise im Hinblick auf eine Optimierungsgröße und ein Optimierungsziel, insbesondere im Hinblick auf eine Minimierung der Energiekosten ermöglicht.

Diese Aufgabe wird durch das Verfahren mit den Merkmalen des Anspruchs 1 gelöst. Vorteilhafte Weiterbildungen sind in den Unteransprüchen angegeben.

Es wird ein Verfahren zum Betreiben einer Pumpstation, insbesondere einer Abwasserpumpstation, vorgeschlagen, welche einen Pumpensumpf mit wenigstens einem Zulauf und wenigstens einem Ablauf und zumindest eine in diesem Pumpensumpf angeordnete, in ihrer Drehzahl regelbare Pumpe umfasst, wobei über einen fortschreitenden Zeitraum die über den Zulauf in den Pumpensumpf zufließende Wassermenge pro Zeiteinheit $Q_{in}(t_i)$ ermittelt und diese Zuflusswerte in einem Datenspeicher abgespeichert werden, aus den abgespeicherten Zuflusswerten Referenzwerte bestimmt werden, die eine einen zukünftigen Optimierungszeitraum $T_{opt}$ umfassende Referenzkurve R als Prognose für einen zu erwartenden Wassermengenzufluss $Q_{in}(t_i)$, mit $t_i \geq t_0$, in den Pumpensumpf definieren, und anschließend unter Anwendung eines numerischen Optimierungsverfahrens für den Optimierungszeitraum $T_{opt}$ zumindest eine erste Drehzahleinstellung $n(t_0)$ für die Pumpe ermittelt wird, die im Hinblick auf zumindest eine bestimmte Optimierungsgröße und zumindest ein mit dieser verbundenes Optimierungsziel ausgehend von dem aktuellen Pegelstand $P(t_0)$ in dem Pumpensumpf und dem prognostizierten Wassermengenzufluss $Q_{in}(t_i)$, mit $t_i \geq t_0$, innerhalb des Optimierungszeitraumes $(T_{opt})$ für das Erreichen eines Zwischenpegelstandes $(P(t_0 + i \cdot \Delta t_i))$ oder Endpegelstands $(P(t_0 + T_{opt}))$ innerhalb oder am Ende des Optimierungszeitraumes $(T_{opt})$ optimal ist, und die Pumpe mit der ermittelten Drehzahleinstellung $n(t_0)$ betrieben wird.

Die grundlegende Idee der Erfindung besteht darin, auf Basis eines erwarteten Zuflusses einer Pumpstation mittels eines mathematischen Verfahrens die Pumpe derart zu steuern, dass ein Optimierungsziel oder mehrere Optimierungsziele bei einer Optimierungsgröße oder mehreren Optimierungsgrößen erreicht wird bzw. werden. Eine Vielzahl verschiedener Optimierungsgrößen und Optimierungsziele kommen hier in Betracht.

Es sei angemerkt, dass der Begriff "Pumpensumpf" im Sinne der Anmeldung nicht dahingehend einschränkend zu verstehen ist, dass er sich auf Abwasserpumpstationen bezieht. Vielmehr ist als Pumpensumpf ein beliebiges Reservoir für Wasser, beispielsweise ein Becken, ein Brunnen oder ein Silo zu verstehen. Die Pumpstation kann Teil einer Trinkwasseranlage, einer Brauchwasseranlage oder einer Abwasseranlage sein.

Die Ermittlung der über den Zulauf in den Pumpensumpf zufließenden Wassermenge pro Zeiteinheit $Q_{in}(t_i)$, d. h. der Zuflusswerte kann messtechnisch erfolgen, insbesondere mittels eines beispielsweise im Zulauf angeordneten Volumenstromsensors. Alternativ kann die Ermittlung rechnerisch aus der Pegeländerung im Pumpensumpf und dem Förderstrom der Pumpe erfolgen.

Beispielsweise kann als Optimierungsgröße der Energieverbrauch der Pumpe und als Optimierungsziel dessen Minimierung verwendet werden. Alternativ kann als Optimierungsgröße der Verschleiß ebenfalls mit dem Ziel der Minimierung verwendet werden. Weiter alternativ kann als Optimierungsgröße der Volumenstrom des heraus geförderten Wassers betrachtet werden, wobei ein Ziel sein kann, diesen über den Optimierungszeitraum annähernd gleichmäßig zu halten oder keine starken Schwankungen zuzulassen.

Eine weitere Optimierungsgröße kann die Konzentration eines bestimmten Stoffs im (Ab-)Wasser sein, wobei hier für die Drehzahlsteuerung der Pumpe ein Regelziel darin bestehen kann, diese Konzentration möglichst gering zu halten. Von Bedeutung ist hier beispielsweise die $H_2S$-Konzentration (Schwefelwasserstoff). Es können jedoch auch andere Konzentrationen zur Optimierung vorgesehen werden, vorzugsweise die Kohlenstoff-, Stickstoff- und/ oder die Phosphor Konzentration.

Eine weitere Optimierungsgröße und ein weiteres Optimierungsziel ist beispielsweise eine Minimierung der Wartungsintervalle der Pumpe z.B. durch Minimierung der Laufleistung (Anzahl der von der Pumpe "zurückgelegten" bzw. "gedrehten" Kilometer) pro Wartungszeitintervall.

Weitere Optimierungsgrößen können beispielsweise die Strömungsgeschwindigkeiten im Pumpensumpf, die Verstopfungsgefahr oder die Stoffstromfrachten sein. Die Strömungsgeschwindigkeit im Pumpensumpf kann beispielsweise dahingehend optimiert werden, dass Ablagerungen am Boden des Pumpensumpfes oder an der Wasseroberfläche (Schwimmdecke) minimiert werden. Bei der Stoffstromfracht als Optimierungsgröße ist ein Optimierungsziel die eine Vergleichmäßigung der Fracht durch eine gute Verdünnung und Durchmischung, beispielsweise bei hohen Konzentrationen eines Giftstoffs.

Auch eine Kombination der genannten Optimierungsgrößen und Optimierungsziele ist möglich und kann zur Bestimmung der zur Erreichung dieser Ziele optimalen Drehzahleinstellung in dem Optimierungszeitraum verwendet werden. In der Regel wird das Optimierungsziel stets eine Maximierung, Minimierung oder Vergleichmäßigung der jeweiligen Optimierungsgröße sein.

Erfindungsgemäß wird für die mathematische Ermittlung, welche Drehzahleinstellung optimal ist, ein Endpegelstand am Ende des Optimierungszeitraums betrachtet. Je nach Zufluss und Pumpleistung während des Optimierungszeitraums kommen hier mehrere Pegelstände in Betracht, die bei dem numerischen Optimierungsverfahren alle berücksichtigt werden. Dabei wird für jeden möglichen, am Ende des Optimierungszeitraumes liegenden Pegelstand ermittelt, wie dieser erreicht werden kann. Gegebenenfalls ist dies über bestimmte Zwischenpegelstände möglich. Für die theoretischen Wege vom aktuellen Pegelstand über etwaige Zwischenpegelstände zum Endpegelstand können sich unterschiedliche Werte der Optimierungsgröße ergeben, wobei nur einer der Wege einen Wert der Optimierungsgröße aufweisen wird, der ein bestimmtes Optimierungskriterium erfüllt, d.h. der beispielsweise minimal oder maximal ist. Dieser Weg ist dann im Hinblick auf das gewählte Optimierungskriterium der optimale Weg. Die erste Drehzahleinstellung wird dann so gewählt, dass der erste Zwischenpegelstand, oder wenn diese nicht vorhanden sind, der Endpegelstand im Optimierungszeitraum erreicht wird.

Vorzugsweise wird nicht nur eine einzelne Drehzahleinstellung $n(t_0)$, d.h. ein zum gegenwärtigen Zeitpunkt einzustellender optimaler Drehzahlwert $n(t_0)$ für das nächste Zeitintervall aus dem numerischen Verfahren ermittelt, sondern ein ganzer Drehzahlverlauf von Drehzahlwerten $n(t_i)$, mit $t_i \geq t0$, für den Optimierungszeitraum $T_{opt}$, die dann bei der Pumpe nacheinander eingestellt werden. Die Drehzahlwerte $n(t_i)$ sind dann diejenigen, die erforderlich sind, um die genannten Zwischenpegelstände jeweils zu erreichen.

Zumindest können die ersten Drehzahlwerte des Verlaufs $n(t_i)$ nacheinander bis zu einem Zeitpunkt eingestellt werden, zu dem das erfindungsgemäße Verfahren erneut durchgeführt wird. Denn aufgrund einer geänderten Prognose kann sich ein neuer Drehzahlverlauf, d.h. können sich Änderungen in den optimalen Drehzahlwerten ergeben.

Grundsätzlich kann das erfindungsgemäße Optimierungsverfahren in zeitlichen Abständen, insbesondere am Ende des Optimierungszeitraumes $T_{opt}$ erneut ausgeführt werden. Hierzu kann dieselbe Referenzkurve R verwendet werden, soweit diese den neuen Optimierungseitraum noch umfasst. Beispielsweise kann die Referenzkurve R einen Prognosezeitraum von 24 Stunden, insbesondere tagesbezogen von 0 Uhr bis 24 Uhr oder tagesübergreifend, beispielsweise von 12 Uhr des aktuellen Tages bis 12 Uhr des Folgestages umfassen. Es ist jedoch auch ein beliebiger anderer Prognosezeitraum möglich. Demgegenüber kann der Optimierungszeitraum $T_{opt}$ beispielsweise 2, 3, 6, 12 oder sogar 24 Stunden betragen, wobei jedoch ein beliebiger anderer Zeitraum dazwischen oder darunter möglich ist. Jedoch kann der Optimierungszeitraum $T_{opt}$ nicht länger sein, als der Prognosezeitraum, da dann für das Optimierungsverfahren keine oder nicht genügend Daten über den prognostizierten Wassermengenzufluss in dem Optimierungszeitraum vorliegen. Umfasst die Referenzkurve den neuen Optimierungszeitraum nicht mehr vollständig, so muss eine neue Referenzkurve R ermittelt werden.

Es kann jedoch auch dann eine neue Referenzkurve R bestimmt und diese in dem nachfolgenden Optimierungsverfahren verwendet werden, wenn die vorherige Kurve den neuen Optimierungszeitraum noch umfasst. Eine neue Bestimmung der Referenzkurve ist sogar zu bevorzugen, da sich die Prognose für den Wassermengenzufluss jederzeit aufgrund von Störgrößen ändern kann und/ oder sich der tatsächliche Wassermengenzufluss gegenüber dem prognostizierten Wassermengenzufluss teilweise erheblich unterscheiden kann.

Aus diesem Grunde ist es ohnehin von besonderem Vorteil und deshalb bevorzugt, wenn das Optimierungsverfahren in bestimmten Zeitabständen wiederholt ausgeführt wird. Bei den Zeitabständen kann es sich um einen festen Zeitraum, beispielsweise 15, 30, 60 oder 120 Minuten handeln. Die Zeitabstände können jedoch alternativ auch durch feste, vorgegebene Zeitpunkte definiert sein, beispielsweise stündlich zur vollen Stunde. Weiter alternativ können sich die Zeitabstände auch nach den Intervallen richten, für die die Drehzahl im Rahmen des Optimierungsverfahrens bestimmt wird. So können beispielsweise von dem ermittelten Drehzahlverlauf die ersten 10, 20 oder 30 Drehzahlwerte eingestellt und das Optimierungsverfahren anschließend erneut ausgeführt werden. Auch ist es möglich, dass das Optimierungsverfahren bereits nach der Einstellung des ersten Drehzahlwerts eines ermittelten Drehzahlverlaufs am Pumpenaggregat erneut ausgeführt wird. Aus diesem Grunde ist es -zumindest in diesem Fall- auch nicht zwingend erforderlich, dass für den gesamten Optimierungszeitraum $T_{opt}$ Drehzahlwerte, d.h. ein Drehzahlverlauf bestimmt wird, da nur der erste Drehzahlwert dieses Verlauf eingestellt wird. Der zweite Drehzahlwert dieses Verlaufs könnte aufgrund einer geänderten Prognose schon nicht mehr optimal sein.

Vorzugsweise erfolgt die Abspeicherung der Zuflusswerte kalenderbezogen, d.h. tagesbezogen und/ oder wochentagesbezogen. Dies bedeutet, dass jeder Messwert einem bestimmten Tag und/ oder einem bestimmten Wochentag zugeordnet abgespeichert wird. Diese Art der Abspeicherung hat den Vorteil, dass sich wiederholende Ereignisse, insbesondere das Verhalten der Nutzer des Systems, an dem die Pumpstation angeschlossen ist, gut archivieren und einander zuordnen lassen. So liegt bei einem Abwasserkanalsystem beispielsweise die Erkenntnis vor, dass über den Verlauf eines Tages zu bestimmten Zeiten mehr Wasser verbraucht wird und folglich in die Kanalisation fließt, als zu anderen Zeiten. So duscht oder badet ein Großteil der Bevölkerung nach dem Aufstehen, ein geringerer Teil nach der Arbeit oder vor dem Schlafengehen, so dass zwischen 7 Uhr und 10 Uhr einerseits und zwischen 18 Uhr und 22 Uhr andererseits ein erhöhter Wasserverbrauch und damit ein erhöhtes Abwasseraufkommen in der Kanalisation vorliegt. Dies sind wiederkehrende Ereignisse, die sich täglich wiederholen, d.h. mit einer Periode von 24 Stunden. Aus diesem Grunde ist ein kalenderbezogenes Abspeichern der Werte vorteilhaft. Die genannten Ereignisse sind insbesondere für Werktage typisch. An Wochenenden können demgegenüber im Wassermengenzufluss andere charakteristische Verläufe erkannt werden. Aus diesem Grunde ist eine zusätzliche oder alternative Verwendung einer wochentagesbezogenen Abspeicherung der Zuflusswerte von Vorteil.

Wird eine tagesbezogene Abspeicherung verwendet, kann daraus der Wochentag ermittelt werden, da für jeden Tag eines Jahres bekannt ist, auf welchen Wochentag dieser Tag fällt bzw. gefallen ist. Eine zusätzliche wochentagesbezogene Abspeicherung erspart jedoch die Bestimmung des Wochentages aus den den Zuflusswerten zugeordneten Tagen. Zur Bestimmung der Referenzkurve reicht jedoch auch eine nur wochentagsbezogene Abspeicherung aus, da die Zuflusswerte von Tagen, die ihrer Benennung nach identisch zu dem aktuellen Wochentag sind, an dem das erfindungsgemäße Verfahren durchgeführt wird, bereits gute Prognosewerte für den Wassermengenzufluss liefern. Eine zusätzliche tagesbezogene Abspeicherung der Zuflusswerte ist jedoch zweckdienlich, wenn bestimmte Zuflusswerte bzw. Zuflusswertreihen aus der Vergangenheit berücksichtigt werden sollen.

Sind die Zuflusswerte kalenderbezogen abgespeichert, so kann aus diesen Werten auf einfache Weise die Referenzkurve ermittelt werden, indem von dem aktuellen Tag, insbesondere dem aktuellen Wochentag ausgegangen wird und die Zuflusswerte eines vergleichbaren Tages als Referenzkurve, insbesondere eines dem aktuellen Wochentag entsprechenden Wochentages verwendet werden. Vorzugsweise kann somit die Referenzkurve aus denjenigen Zuflusswerten eines Tages gebildet sein, der einen oder mehrere Tage zurückliegt. Alternativ kann die Referenzkurve aus denjenigen Zuflusswerten eines Tages gebildet sein, der einen oder mehrere Wochen, insbesondere vier Wochen, d. h. einen Monat, zurückliegt, oder der 52 Wochen, d.h. ein Jahr, zurückliegt, und der seiner Benennung nach identisch dem aktuellen Wochentag ist. Ist der aktuelle Tag beispielsweise ein Donnerstag, so können zum Beispiel die Zuflusswerte des gestrigen Mittwochs oder des Donnerstags der letzten Woche, des letzten Monats oder des letzten Jahres als Referenzkurve R verwendet werden.

Auch eine gemittelte Kombination von zwei oder mehreren Tagen ist möglich. So kann die Referenzkurve beispielsweise aus auf den gleichen Messzeitpunkt bezogen gemittelten Zuflusswerten mehrerer Tage gebildet sein. In einer ersten Variante kann die Bildung aus einer Anzahl unmittelbar vergangener Tage erfolgen. So kann beispielsweise über die letzten 5, 7, 10 oder 15 Tage gemittelt werden. Gemäß einer zweiten Variante kann aus einer Anzahl ihrer Benennung nach gleichen Wochentagen gemittelt werden. Bezug nehmend auf das obige Beispiel eines Donnerstags als aktuellen Wochentag, kann beispielsweise über die letzten 4, 8 oder 12 Donnerstage gemittelt werden. Gemäß einer dritten Variante kann ein Mittelwert aus einer Anzahl aufeinander folgender Werktage oder aufeinander folgender Wochenendtage erfolgen. So kann beispielsweise ein Mittelwert aus den letzten 5, 10 oder 15 Werktagen gebildet werden, sofern der aktuelle Tag ein Werktag ist, oder es kann ein Mittelwert aus den letzten 4, 8 oder 12 Wochenendtagen gebildet werden, sofern der aktuelle Tag ein Wochenendtag ist. In allen genannten Fällen können dann die auf den gleichen Messzeitpunkt bezogen gemittelten Zuflusswerte als Referenzkurve verwendet werden.

"Auf den gleichen Messzeitpunkt bezogen" bedeutet hier, dass jeweils diejenigen Zuflusswerte gemittelt werden, die zu einem gleichen Messzeitpunkt aufgenommen worden sind. Wurden beispielsweise jeweils um 12 Uhr, um 13 Uhr, um 14 Uhr und um 15 Uhr Zuflusswerte aufgenommen, werden jeweils alle 12 Uhr-Werte, alle 13 Uhr-Werte, alle 14 Uhr-Werte und alle 15 Uhr-Werte gemittelt. Allerdings sei angemerkt, dass eine Zuordnung der Zuflusswerte zu einer Uhrzeit hier nicht zwingend erforderlich ist. Vielmehr können die einem bestimmten Tag zugeordneten Zuflusswerte auch durch einen fortlaufenden Index identifiziert werden, der einen Messzeitpunkt definiert. So können beispielsweise jeweils alle einem Indexwert 20 zugeordneten Werte, einem Indexwert 21 zugeordneten Werte und einem Indexwert 22 zugeordneten Werte etc. gemittelt werden. Die Indexwerden sind Zähler, die bei einem Tageswechsel wieder bei eins beginnen. Es ist jedoch durchaus möglich, dass die Abspeicherung der Zuflusswerte uhrzeitbezogen erfolgt.

Nach einer weiteren Ausführungsvariante kann die Referenzkurve aus einem gewichteten Mittel gebildet sein aus einerseits denjenigen Zuflusswerten eines bestimmten Tages, der einen oder mehrere Tage zurückliegt, oder der einen oder mehrere Wochen zurückliegt und seiner Benennung nach identisch dem aktuellen Wochentag ist, und andererseits den gleichen Messzeitpunkt bezogen gemittelten Zuflusswerten mehrerer Tage, insbesondere aus einer Anzahl unmittelbar vergangener Tage, oder aus einer Anzahl ihrer Benennung nach gleicher Wochentage oder einer Anzahl aufeinander folgender Werktage oder aufeinanderfolgender Wochenendtage. Im Hinblick auf das oben genannte Beispiel mit einem Donnerstag als aktuellen Wochentag, können beispielsweise die Zuflusswerte des letzten Donnerstags verwendet und mit 70% gewichtet und ein Mittelwert aus den letzten 8 Donnerstagen gebildet und zu 30% gewichtet werden, wobei dann die Summe dieser gewichteten Mittelwerte das Mittel bildet, das als Referenzkurve verwendet wird.

Es sei jedoch angemerkt, dass beliebige andere Kombinationen von gewichteten Mittelwerten möglich sind. Insbesondere kann ein gewichtetes Mittel aus einer ersten Anzahl von Tagen, beispielsweise der vergangenen 5 Tage, und einer zweiten Anzahl von Tagen, beispielsweise der vergangenen 4 Donnerstage, berechnet werden. Die Gewichtung kann zu 50%-50% erfolgen, jedoch ist es von Vorteil, die jüngeren Zuflusswerte stärker zu gewichten, da diese die aktuellen Gegebenheiten besser widerspiegeln.

Gemäß einer weitere Ausführungsvariante kann die Referenzkurve auch dadurch ermittelt werden, dass die Zuflusswerte eines letzten Messzeitraumes, beispielsweise der letzten 6, 12 oder 24 Stunden verwendet und mit den abgespeicherten Zuflusswerten, jeweils bezogen auf einen dem aktuellen Zeitpunkt entsprechenden Zeitpunkt, verglichen werden, wobei zu jedem Vergleich ein Korrelationsfaktor bestimmt wird und diejenigen Zuflusswerte als Referenzkurve verwendet werden, die den größten Korrelationsfaktor aufweisen.

Vorzugsweise umfasst die Referenzkurve einen Zeitraum von 24 Stunden. Dies vereinfacht die Datenverarbeitung, da die sich wiederholenden Ereignisse ebenfalls etwa alle 24 Stunden auftreten. Der 24-Stundenzeitraum kann den gesamten aktuellen Tag abdecken, d.h. von 0:00 Uhr bis 24:00 Uhr des aktuellen Tages gehen, oder tagesübergreifend liegen und bei der aktuellen Uhrzeit beginnen.

Die erstgenannte, tagesbezogene Variante hat den Vorteil, dass die Berechnung der Referenzkurve aus den tagesbezogen abgespeicherten Zuflusswerten besonders einfach ist, da diese dasselbe Datenraster verwenden. Ein weiterer Vorteil der tagesbezogenen Variante besteht darin, dass ein Teil der prognostizierten Referenzwerte der Referenzkurve bereits in der Vergangenheit liegt, und dass nur der andere Teil in der Zukunft liegt und daher effektiv zu Prognosezwecken verwendet werden kann. Der erste Teil der Referenzkurve kann dazu verwendet werden, die Referenzkurve zu korrigieren, in dem die in der Vergangenheit liegenden Werte der Referenzkurve mit den bereits gemessen Werten des gegenwärtigen Tages verglichen werden. Weichen die Werte der Referenzkurve zu den gemessenen Werten deutlich ab, so kann die Referenzkurve, insbesondere der in der Zukunft liegende Teil der Referenzkurve angepasst werden. Insbesondere kann sie so angepasst werden, dass die Referenzkurve im Wesentlichen den gemessenen Werten entspricht. Dies kann im einfachsten Fall durch einen zu multiplizierenden Faktor oder einen zu addierenden Wert (Offset) erfolgen.

Die zweitgenannte, tagesübergreifende Variante hat den Vorteil, dass der gesamte von der Referenzkurve umfasste Zeitraum in der Zukunft liegt und daher zu Prognosezwecken verwendet werden kann. Es ist zu berücksichtigen, dass die Optimierung des Betriebs der Pumpe, beispielsweise im Hinblick auf den Energieverbrauch, umso genauer und besser erfolgen kann, je weiter voraus die erforderliche Pumpleistung vorhergesagt werden kann.

Gegenüber dem 24 Stunden-Zeitraum besteht auch die Möglichkeit, dass die Referenzkurve einen beliebig anderen Zeitraum, insbesondere einen kürzeren wie beispielsweise nur 3, 6 oder 12 Stunden umfasst, oder längeren Zeitraum wie beispielsweise 36 oder 48 Stunden umfasst.

Die Messung der über den Zulauf in den Pumpensumpf zufließenden Wassermenge pro Zeiteinheit erfolgt vorteilhafterweise über einen 24 Stunden-Zeitraum von 0 Uhr bis 24 Uhr und wird während der Anwendung des Optimierungsverfahrens fortgesetzt. Dies bedeutet, dass das erfindungsgemäße Verfahren zumindest zwei parallel ablaufende Prozesse umfasst. In dem ersten Prozess erfolgt ununterbrochen die Datengewinnung, so dass eine Datenbasis mit ermittelten Zuflusswerten angelegt und zunehmend größer wird, die als Erfahrungswissen zur Bildung der Referenzkurve und damit zur Prognostizierung zukünftiger Wasserzuflussmengen dient. In dem zweiten Prozess wird unter Berücksichtigung der prognostizierten Wasserzuflussmengen die Drehzahl bestimmt, die zur Erreichung eines bestimmten Optimierungsziels einer bestimmten Optimierungsgröße erforderlich ist.

Vorzugsweise können die Zuflusswerte vor der Speicherung interpoliert werden, so dass eine höhere Auflösung der Zuflusswerte in dem Datenspeicher vorliegt. Alternativ können die Zuflusswerte direkt in der Datenbank abgespeichert werden und nach dem Auslesen interpoliert werden. Auf diese Weise kann die Referenzkurve, d.h. die Referenz-Tageszuflussganglinie interpoliert werden. Hierdurch wird der Speicherbedarf gering gehalten.

Die Speicherung der Zuflusswerte kann auf verschiedene Art erfolgen. Beispielsweise können die Zuflusswerte als abgeschlossener tagesbezogener und/ oder wochentagesbezogener Datensatz abgespeichert werden. Dies bedeutet, dass für jeden Tag ein eigener Datensatz mit einer vorbestimmten Anzahl an Daten in dem Datenspeicher gespeichert ist, wobei jedem Tag dieselbe Anzahl an Zuflusswerten zugeordnet ist. Dies vereinfacht die Datenverarbeitung. Insbesondere können durch diese Datenarchivierung Datensätze verschiedener Tage auf einfache Weise miteinander verrechnet, beispielsweise gemittelt werden, da jeder Datensatz als Matrix betrachtet werden kann. Etwas schwierig ist bei dieser Datenstruktur allerdings die Betrachtung tagesübergreifender Optimierungszeiträume, da in diesem Fall zur Bildung der Referenzkurve ein letzter Teil der Daten eines ersten Datensatzes und der erste Teil der Daten des nächstfolgenden Datensatzes verwendet werden muss.

Es ist deshalb gemäß einer alternativen Variante von Vorteil, die Zuflusswerte als kontinuierliche, endlose Datenreihe abzuspeichern. Aus dieser Endlos-Datenreihe kann eine Datenreihe oder können beliebige tagesbezogene Datenreihen dann zur Ermittlung der Referenzkurve "herausgeschnitten" werden. Insbesondere können aus der "endlosen" Datenreihe auch tagesübergreifende Optimierungszeiträume betrachtet werden.

Die Referenzkurve kann vorzugsweise durch Berücksichtigung einer Niederschlagsprognose korrigiert werden. Eine solche Niederschlagsprognose ist natürlich nur für diejenige geografische Region sinnhaft, in der die Pumpstation steht. Es kann damit vorteilhafterweise bei der Prognostizierung der in den Pumpensumpf fließenden Wassermenge berücksichtigt werden, ob und inwieweit infolge in die Kanalisation eintretendes Regenwasser den Zufluss in den Pumpensumpf erhöht. Die Zuflussprognose, d.h. die Referenzkurve wird hierdurch genauer.

Zur Lösung des Optimierungsproblems können die Methoden der dynamischen Optimierung verwendet werden. So kann beispielsweise unter Ausnutzung des Bellmanschen Optimalitätsprinzips der dynamischen Optimierung nacheinander Teilprobleme formuliert und gelöst werden, die schließlich auf die gesuchte optimale Regelungsstrategie für das Gesamtproblem führen.

Vor diesem Hintergrund kann die Anwendung des Optimierungsverfahrens beispielsweise im Hinblick auf die Minimierung des Energieaufwandes derart erfolgen, dass der Optimierungszeitraum $T_{opt}$ in eine Vielzahl von Zeitschritten $t_i$ unterteilt wird und für jeden Zeitschritt $t_i$ bestimmt wird, welche diskreten Zwischenpegelstände $P_x(t_i)$ in dem Pumpensumpf in diesem Zeitschritt $t_i$ durch den Betrieb der Pumpe unter Berücksichtigung des prognostizierten Wassermengenzuflusses $Q_{in}(t_i)$ erreichbar sind, wobei für alle möglichen Übergänge von Pegelständen $P_x(t_i)$ von jedem Zeitschritt $t_i$ zu dem nächsten Zeitschritt $t_{i+1}$ ein Energieaufwand $E_i$ berechnet wird und anschließend derjenige Weg vom Pegelzustand $P_A(t_0)$ bei dem ersten Zeitschritt $t_0$ zum Endpegelzustand $P_E(t_n)$ im letzten Zeitschritt $t_n$ des Optimierungszeitraums $T_{opt}$ bestimmt wird, der den geringsten Energieaufwand $E_{min}$ aufweist. Hierdurch wird ein Pegelverlauf $P(t_n)$ für den Optimierungszeitraum $T_{opt}$ bestimmt, der als Referenzpegelverlauf verwendet werden kann. Aus dem Referenzpegelverlauf $P(t_n)$ kann diejenige Drehzahl $n(t_0)$ der Pumpe für das gegenwärtige Zeitintervall $(t_0)$ berechnet und bei der Pumpe so eingestellt werden, dass der auf dem identifizierten Weg liegende Pegelstand $(P_x(t_1))$ des nächsten Zeitintervalls $(t_1)$ erreicht wird.

Vorzugsweise kann der Energieaufwand in Gestalt der Energiekosten ausgedrückt werden, die anhand einer Kostenfunktion berechnet werden können.

Wird die Pumpe nun in ihrer Drehzahl so gesteuert, dass der Pegel im Pumpensumpf dem ermittelten Pegelverlauf $P(t_n)$ folgt, so wird die Pumpe energetisch optimal betrieben. Dies gilt jedenfalls solange, wie die Prognose für den Wassermengenzufluss zutrifft. Je weiter die Prognose in die Zukunft geht, desto unsicherer ist sie. Aus diesem Grunde ist es von Vorteil, das Optimierungsverfahren in zeitlichen Abständen zu wiederholen, insbesondere nach einer vorbestimmten Anzahl an Zeitintervallen $t_i$.

Das genannte Verfahren nach Bellman stellt ein mögliches mathematisches Optimierungsverfahren dar. Es sind jedoch auch andere mathematische Optimierungsverfahren möglich.

Wie anhand der Optimierungsgröße "Energieaufwand" erläutert wurde, können vorzugsweise zu erwartende/ zukünftige Werte der Optimierungsgröße oder -im Falle mehrerer Optimierungsgrößen- einer der Optimierungsgrößen bei der Optimierung berücksichtigt werden. Auch ist es möglich, vergangene Werte der Optimierungsgröße zu berücksichtigen.

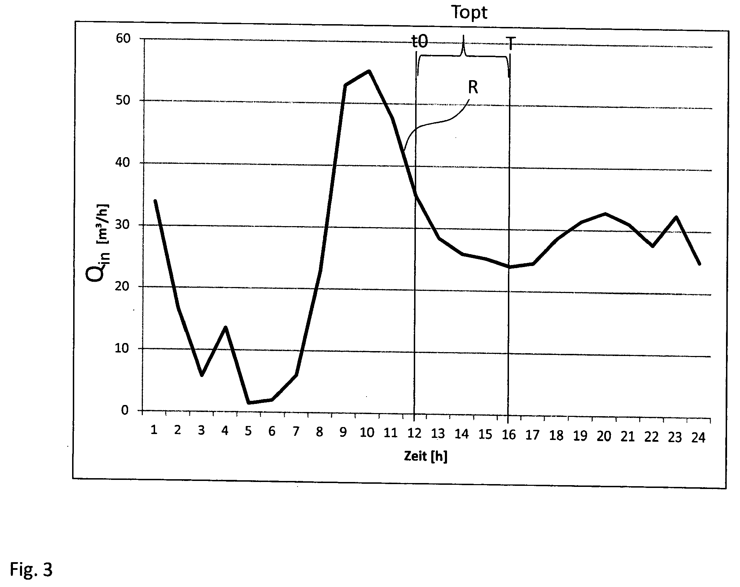

Vorzugsweise kann der Pegel P des Pumpensumpfes ab und zu auf den Minimalpegel $P_{min}$ gesenkt werden. Dies entspricht quasi einem Reset der Pumpstation. Dabei ist es von Vorteil, wenn eine regelmäßige Entleerung stattfindet, beispielsweise zu bestimmten festgelegten Zeitpunkten und/oder in vorbestimmten Zeitintervallen, beispielsweise wöchentlich, täglich oder mehrmals pro Tag in Abständen von mehreren Stunden. Dabei ist es jedoch nicht erforderlich, dass diese Zeitpunkte oder Zeitintervalle genau eingehalten werden. Vielmehr kann das Überschreiten eines solchen definierten Zeitpunktes oder Zeitintervalls eine Aktivierung für den Entleerungsvorgang darstellen, der jedoch erst dann gestartet wird, wenn eine bestimmte Bedingung vorliegt oder eintritt. Eine bevorzugte Bedingung ist beispielsweise ein minimaler Wassermengenzufluss, der insbesondere nachts und vorzugsweise zwischen 5 und 6 Uhr vorliegt, da dort ausweislich der Referenzkurve R in Figur 3 der Zufluss minimal ist. Ein minimaler Zufluss kann dann den Entleerungsvorgang auslösen. Eine alternative oder zusätzliche Bedingung kann das Vorliegen eines minimalen Strompreises sein. Wird der Pumpensumpf in preiswerten Zeitabschnitten geleert, können die Kosten weiter erheblich reduziert werden, da es dann in Zeitabschnitten hoher Strompreise und starkem Zufluss nicht erforderlich ist, die Pumpe mit hohen Leistungen zu betreiben.

Des Weiteren kann zusätzlich oder alternativ zur genannten Vollentleerung in zeitlichen Abständen ein Spülvorgang stattfinden, bei dem ein Maximalförderstrom $Q_{max}$, insbesondere eine maximale Drehzahl bei der Pumpe eingestellt wird. Dies dient der Lösung von Ablagerungen und/ oder von Sielhäuten (Biofilme an der Rohrwandung) in der angeschlossenen Druckleitung. Durch diese Ablagerungen ändert sich die Rauigkeit der Druckleitung und ihr Querschnitt. Dies bedingt wiederum, dass die Pumpe bei gleichem Förderstrom zunehmend mehr Energie benötigt. Es ist daher von Vorteil, wenn regelmäßig ein Maximalförderstrom $Q_{max}$ bei der Pumpe eingestellt wird, beispielsweise zu bestimmten festgelegten Zeitpunkten und/oder in vorbestimmten Zeitintervallen, beispielsweise täglich, wöchentlich oder monatlich. Die Länge des Zeitintervalls ist abhängig von der Beaufschlagung der Pumpstation mit Wasser, insbesondere können die Zeitintervalle in Zeiten eines höheren Zuflusses kürzer sein als in Zeiten eines geringen Zuflusses.

Dabei ist es jedoch nicht unbedingt erforderlich, dass diese Zeitpunkte oder Zeitintervalle genau eingehalten werden. Vielmehr kann das Überschreiten eines solchen definierten Zeitpunktes oder Zeitintervalls eine Aktivierung für den Spülvorgang darstellen, der jedoch erst dann gestartet wird, wenn eine bestimmte Bedingung vorliegt oder eintritt. Eine bevorzugte Bedingung ist beispielsweise das Erreichen oder Überschreiten eines bestimmten Pegels im Pumpensumpf. Als Pegel kann hier beispielsweise der Maximalpegel $P_{max}$ oder ein Pegel zwischen 5% bis 30% unterhalb dieses Maximalpegels verwendet werden. Eine alternative oder zusätzliche Bedingung ist das zukünftige Vorliegen eines vergleichsweise hohen Wassermengenzuflusses, d.h. eines Zuflusses oberhalb eines bestimmten definierten Grenzwertes. Dies kann aus der Referenzkurve R bestimmt werden. Auf diese Weise können Spülvorgänge vermieden werden, wenn in der nächsten Zeit keine hohen Wassermengen zu erwarten sind, und bewusst dann durchgeführt werden, wenn ohnehin viel Wasser aus der Pumpstation abzupumpen ist.

Zusätzlich oder alternativ kann die Auslösung eines Spülvorgangs dann erfolgen, wenn bei einem bestimmten Förderstrom ein zuvor festgelegter Referenzenergieverbrauch, insbesondere eine bestimmte Referenzstrom- oder Referenzleistungsaufnahme der Pumpe überschritten wird. Der Referenzwert des Energieverbrauchs, respektive der Strom- oder Leistungsaufnahme kann beispielsweise bei oder unmittelbar nach der Inbetriebnahme der Pumpstation, d.h. wenn die Druckleitung noch ablagerungsfrei ist, bei einem bestimmten Volumenstrom gemessen und abgespeichert werden. Wird der bestimmte Volumenstrom erreicht, kann der aktuelle Energieverbrauch respektive die aktuelle Strom- oder Leistungsaufnahme ermittelt werden und mit dem abgespeicherten Referenzwert verglichen werden. Damit diese Prüfung nicht zu selten stattfindet, sollte der zur Referenz herangezogene Volumenstrom nicht zu hoch sein. Daher ist ein mittlerer Volumenstrom für den Referenzwert geeignet. Der aktuelle Energieverbrauch, respektive die aktuelle Strom oder Leistungsaufnahme kann messtechnisch oder rechnerisch ermittelt oder geschätzt werden. Übersteigt der aktuelle Energieverbrauch, die aktuelle Strom- oder Leistungsaufnahme den abgespeicherten Referenzwert um einen bestimmten Betrag, beispielsweise um 20% bis 50%, so kann dies als Auslöser für den genannten Spülvorgang dienen. Die Ablagerungen in der Druckleitung werden dadurch verringert.

Alternativ zu einem Spülvorgang, kann zumindest ein separater Druckluftkompressor verwendet werden, um die Druckleitung zu reinigen. Wie zuvor zum Spülvorgang erläutert, kann auch dieser Druckluftkompressor in zeitlichen Abständen, insbesondere periodisch, oder bei Überschreiten des Referenzwerts für den Energieverbrauch aktiviert werden.

Vorzugsweise kann die Optimierung auch übergeordnet auf mehrere Pumpen in einer Pumpstation angewendet werden. Darüber hinaus kann durch eine übergeordnete Steuerung mehrerer Pumpstationen der Betrieb entsprechend der gewählten Optimierungsgröße oder Optimierungsgrößen entsprechend optimiert werden. Bei Abwasserpumpstationen können dadurch die Abwässer auf Kläranlagen effektiver behandelt und Vorfluter entlastet werden. Die Pumpstationen können über ein Pumpen-Netzwerk steuerungstechnisch miteinander verbunden sein. Dabei kann jede einzelne Pumpstation neben der übergeordneten Gesamt-Pumpennetzwerk-Steuerung noch über eine eigene Steuerungsstrategie verfügen. Beispielsweise kann eine übergeordnete Steuerung von einer oder von mehreren Pumpstationen unter Berücksichtigung von Abwassermengen-Prognosen erfolgen. Dies kann zum Beispiel für die Abwasser-Mengenbewirtschaftung der Retentionsräume einer Mischwasserkanalisation, beispielsweise eines Stauraumkanals, eines Regenrückhaltebeckens, eines Vorfluters etc. sinnvoll sein. Denn bei der Mischwasserkanalisation, bei der ein einziger Kanal gemeinsam für Schmutz- und Regenwasser verwendet wird, ist es nach dem Stand der Technik so, dass bei einem starken Regenereignis dasjenige Regenwasser oder Mischwasser, welches nicht mehr von der Kläranlage aufgenommen werden kann, nach einer groben mechanischen Reinigung beispielsweise mittels eines Rechens oder eines Bodenfilters über einen Überlauf direkt in einen Vorfluter geleitet wird. Ferner kann die Abwasser-Mengenprognose unter dynamischer Optimierung, beispielsweise unter besonderer Berücksichtigung einer besonders energieeffizienten Abwasserpumpensteuerung erfolgen.

Bei größeren Zuflüssen in die Kanalisation, wie sie insbesondere bei starken Regengüssen vorkommen, werden häufig auch größere Materialien wie Erdreich, Steine, Blätter und/ oder Abfälle in die Kanalisation, d.h. in die Kanäle und Pumpensümpfe befördert. In den Kanälen kommt es ferner zu sogenannten Spülstößen, wodurch auch Ablagerungen in den Kanälen mitgerissen werden und in die Pumpensümpfe gelangen. Insgesamt ergibt sich dadurch eine erhebliche Menge an Feststoffen, die sich im Pumpensumpf sammeln und das Abwasser trüben. Auch gelangen in den Kanälen vorhandene Ablagerungen durch Spülstöße in den Pumpensumpf. Im Ergebnis können die eingebrachten groben Materialien zu Verstopfungen führen. Des Weiteren gelangen von Verkehrsflächen beispielsweise Streusalze vom Winterdienst in die Kanalisation. Dadurch kann sich die Konzentration chemischer Stoffe im Pumpensumpf erhöhen, die auf Teile des Pumpenaggregats korrosiv wirken.

Neben dem Gütekriterium der Energieeinsparung unter Berücksichtigung der Zulauf-Ganglinie und vorzugsweise auf der Grundlage der Variabilität des Wasserstands im Pumpensumpf, können zusätzlich auch Temperaturganglinien, Trübungsganglinien und/ oder Konzentrationsganglinien des Abwassers im Pumpensumpf zur Steuerung des Pumpenaggregats verwendet werden. Neben einer reinen hydraulischen Pumpen-Steuerung ist dadurch z.B. auch eine Steuerung hinsichtlich korrosiver oder verstopfungsrelevanter Bestandteile im Abwasserstrom möglich. So ist es insbesondere von Vorteil, die Drehzahl bei der Feststellung eines Spülstoßes überproportional zu steigern, um einen verstopfungsfreien Betrieb zu ermöglichen.

Ein Spülstoß kann durch einen plötzlichen starken Anstieg des Zuflusses in den Pumpensumpf erkannt werden, und/ oder durch eine Trübung, die einen bestimmten Wert überschreitet, und/ oder durch die Konzentration eines bestimmten Stoffes im Abwasser, die einen bestimmten Wert überschreitet.

Da ein starker Regenguss, beispielsweise in der Art eines sommerlichen Regenschauers, und der damit verbundene Spülstoß in der Kanalisation häufig vergleichsweise kurz ist, kann auch die starke Drehzahlerhöhung beim Pumpenaggregat nur von kurzer Dauer sein, insbesondere ein bis wenige Minuten betragen. Die dann eingestellte Drehzahl kann beispielsweise der Maximaldrehzahl entsprechen. Insbesondere überlagert die spülstoßbedingte erhöhte Drehzahleinstellung die laufende energieoptimierte Drehzahlsteuerung auf der Grundlage der Zuflussprognose.

Das erfindungsgemäße Verfahren wird nachfolgend anhand von Beispielen erläutert. Es zeigen:

Figur 1: Schematische Darstellung einer Pumpstation
Figur 2: Prinzipdarstellung des übergeordneten Verfahrensablaufs
Figur 3: Diagramm mit einer Referenzkurve
Figuren 4a-4d: Darstellung von Zuständen und Zustandsübergängen der Pumpstation mit Energieaufwandsbewertung

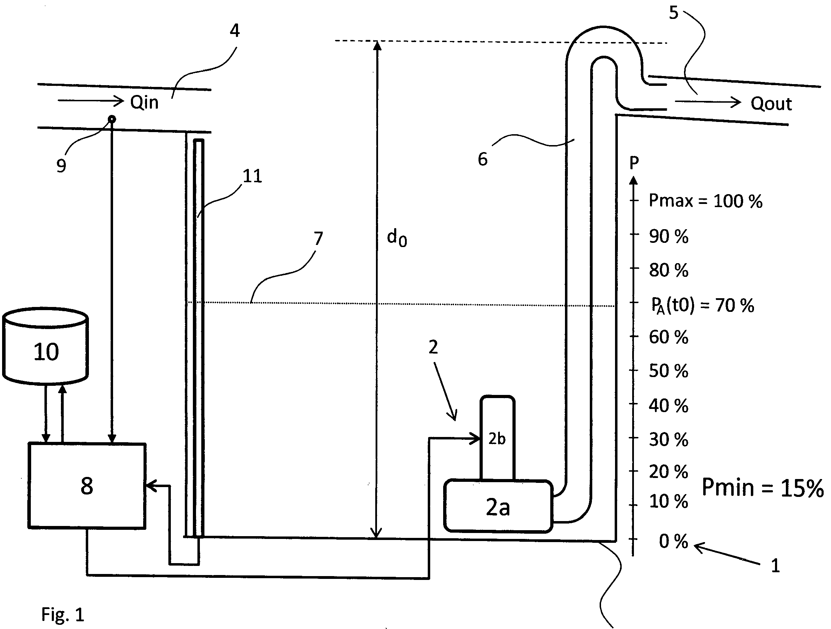

Figur 1 zeigt eine Abwasserpumpstation 1 umfassend einen Pumpensumpf 3 mit einem Zulauf 4 und einem Ablauf 5 und eine in diesem Pumpensumpf 3 angeordnete elektromotorische Pumpe 2, die in ihrer Drehzahl regelbar ist. Die Pumpe 2 besteht aus einer Pumpeneinheit 2a und einem diese antreibenden Elektromotor 2b. Sie pumpt über eine Druckleitung 6 das in der Pumpstation 1 befindliche Medium in den geodätisch höher liegenden Ablauf 5. Von dort fließt das Abwasser weiter zu einer nächsten Pumpstation, einen Vorfluter oder direkt zu einer Kläranlage.

In dem Zulauf 4 ist ein optionaler Volumenstromsensor 9 angeordnet, der über einen fortschreitenden Zeitraum die über den Zulauf 4 in den Pumpensumpf 3 zufließende Wassermenge pro Zeiteinheit $Q_{in}(t_i)$ misst. Es ist jedoch auch möglich und bevorzugt, die Zuflusswerte $Q_{in}(t_i)$ aus den Pegeländerungen und dem Förderstrom $Q_{out}(t_i)$ der Pumpe 2 zu berechnen. In diesem Fall wird der Volumenstromsensor 9 nicht benötigt. Die gemessenen Zuflusswerte werden in einem Datenspeicher 10 abgespeichert.

Das Datenmanagement, d.h. die Datenerfassung, Datenverarbeitung und Datenspeicherung, sowie die Drehzahlsteuerung der Pumpe 2 wird von einer Auswerte- und Steuereinheit 8 durchgeführt, die über entsprechende Leitungen mit dem Volumenstromsensor 9, dem Datenspeicher 10 und der Pumpe 2, insbesondere deren Elektromotor 2b verbunden ist. Für die Datenerfassung weist die Auswerte- und Steuerungseinheit 8 eine Messelektronik oder Rechenelektronik auf. Ein den Elektromotor drehzahlabhängig bestromender Frequenzumrichter kann direkt baulich am Elektromotor 2b angeordnet oder ebenfalls Teil der entfernten Auswerte- und Steuereinheit 8 sein.

In dem Pumpensumpf 3 ist zudem ein Füllstandssensor 11 angeordnet, der den Pegelstand im Pumpensumpf 3 misst. Der Füllstandssensor 11 ist mit der Auswerte- und Steuereinheit 8 verbunden. Er dient der Erfassung des aktuellen Pegelstandes, woraus die Berechnung des Zuflusses $Q_{in}$ erfolgen kann. Ein aktueller Pegelstand wird durch die Linie 7 dargestellt.

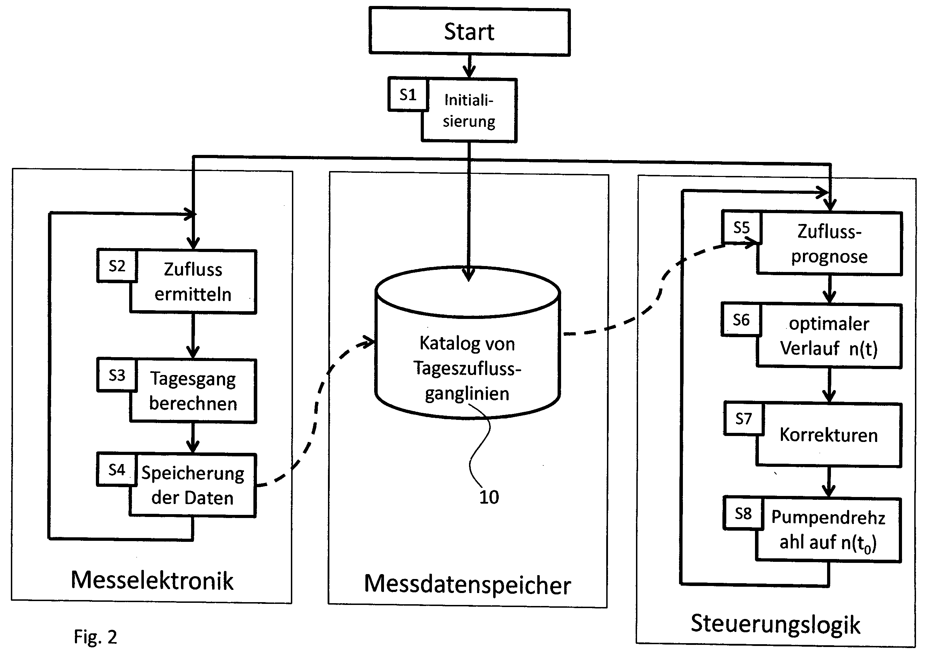

Der prinzipielle Ablauf des Verfahrens ist in Figur 2 veranschaulicht. Es beginnt mit einer Initialisierung in Schritt S1. Dieser Schritt dient hier nur der Vollständigkeit und berücksichtigt die Implementierung des Verfahrens auf einem Mikroprozessor, insbesondere einem Computersystem, der Teil der Auswerte- und Steuereinheit 8 sein kann. Er ist jedoch für den Kerngedanken der Erfindung nicht erheblich. Mit der Initialisierung werden Programm-Variablen mit bestimmten Startparameterwerten vorbelegt.

Anschließend teilt sich das Verfahren in drei Funktionsbereiche auf, nämlich in die Datenerfassung mittels Mess- oder Rechenelektronik der Auswerte- und Steuereinheit 8, die Datenspeicherung in dem Datenspeicher 10 und die Datenauswertung in einer Steuerungslogik der Auswerte- und Steuereinheit 8. Die Initialisierung betrifft alle drei Teile. Die Ermittlung der Zuflusswerte $Q_{in}(t_i)$ und Abspeicherung läuft parallel zur Datenauswertung. Die Datenauswertung umfasst zwei Prozessabschnitte, die Prognostizierung des Zuflusses $Q_{in}$ und die Bestimmung und Einstellung der optimierten Drehzahl.

Bei dem ersten Prozessabschnitt werden aus den abgespeicherten Zuflusswerten Referenzwerte bestimmt, die eine Referenzkurve R als Prognose für einen zu erwartenden Wassermengenzufluss $Q_{in}(t_i)$, mit $t_i \geq t_0$ in den Pumpensumpf 2 definieren. Diese Referenzkurve R umfasst einen zukünftigen Optimierungszeitraum $T_{opt}$. In dem sich anschließenden zweiten Prozessabschnitt wird im Rahmen der Datenverarbeitung unter Anwendung des numerischen Optimierungsverfahrens nach Bellman für den Optimierungszeitraum $T_{opt}$ zumindest eine erste Drehzahleinstellung $n(t_0)$ für die Pumpe 2 ermittelt, die zur Minimierung des Energieverbrauchs $E_i$ ausgehend von dem aktuellen Pegelstand $P(t_0)$ in dem Pumpensumpf 3 und dem prognostizierten Wassermengenzufluss $Q_{in}(t_i)$, mit $t_i \geq t_0$, zum gegenwärtigen Zeitpunkt $t_0$ optimal ist. Die ermittelte Drehzahleinstellung $n(t_0)$ wird dann von der Auswerte- und Steuerungseinheit 8 bei der Pumpe 2 eingestellt und mit dieser Drehzahl betrieben.

In Schritt S2 wird der Wassermengenzufluss $Q_{in}(t_i)$ in den Pumpensumpf 3 pro Zeiteinheit ermittelt. Dies erfolgt entweder durch Messung des Volumenstroms im Zulauf 4 in diskreten Zeitschritten bzw. zu diskreten Zeitpunkten $t_i$ mittels des Volumenstromsensors 9 und der Messelektronik der Auswerte- und Steuereinheit 8. Alternativ kann dies dadurch erfolgen, dass der Pegelstand $P(t_i)$ im Pumpensumpf 3 in diskreten Zeitschritten bzw. zu diskreten Zeitpunkten $t_i$ mittels des Füllstandsensors 11 und der Messelektronik der Auswerte- und Steuereinheit 8 gemessen wird und aus den Pegelstandsänderungen $\Delta P(t_i)$ und dem Förderstrom $Q_{out}(t_i)$ der Pumpe 2 in dem entsprechenden Zeitschritt berechnet wird. Der Förderstrom $Q_{out}(t_i)$ kann wiederum entweder gemessen oder aus Betriebsgrößen der Pumpe wie der Drehzahl oder der Leistungsaufnahme berechnet oder geschätzt werden. Die zufließende Wassermenge $Q_{in}(t_i)$ wird ununterbrochen, d.h. über einen Zeitraum von 24 Stunden von 0 Uhr bis 24 Uhr erfasst bzw. ermittelt. Die Ermittlung erfolgt in diskreten Zeitschritten $t_i$ beispielsweise für alle 3 oder 5 Minuten.

Zusätzlich zu dem Volumenstrom $Q_{in}(t_i)$ kann auch der Stoffstrom in den Pumpensumpf anhand der Trübung des Abwassers im Pumpensumpf ermittelt werden. Die Trübung kann mittels einer Trübungssonde über die Zeit gemessen und gespeichert werden, so dass eine Trübungsganglinie entsteht. Anhand der Trübung kann ein durch ein starkes Regenwasserereignis auftretender Spülstoß in der Kanalisation detektiert, insbesondere wenn ein bestimmter Trübungswert überschritten wird. In diesem Fall, kann das Pumpenaggregat für eine bestimmte Dauer, insbesondere für eine bis wenige Minuten, mit einer erhöhten Drehzahl, insbesondere mit maximaler Drehzahl betrieben werden.

In Schritt S3 erfolgt die Berechnung eines Tagesgangs. Dies bedeutet, dass die Zuflusswerte dem jeweiligen Messtag und dem jeweiligen Messzeitpunkt zugeordnet werden, d.h. tagesbezogen und uhrzeitbezogen archiviert werden. Ferner werden die Zuflusswerte interpoliert. Die uhrzeitbezogen geordneten Zuflusswerte über einen Tag bilden den Tagesgang des Zuflusses $Q_{in}(t_i)$ der Pumpstation 1.

In Schritt S4 folgt die Speicherung der Zuflusswerte in dem Datenspeicher 10. Die Abspeicherung der Zuflusswerte erfolgt tagesbezogen, so dass jeder Zuflusswert einem bestimmten Tag zugeordnet ist. Die Zuflusswerte eines Tages bilden einen sogenannten Tagesgang für den Abwasserzufluss. Grafisch dargestellt als Kurve bilden sie eine sogenannte Abwasserzufluss-Ganglinie, auch Tageszuflussganglinie genannt.

Anschließend werden die Schritte S2 bis S4 wiederholt. Auf diese Weise wird für jeden Tag der Tagesgang für den Zufluss erfasst. Nach und nach wird in dem Datenspeicher ein ganzer Katalog von Tageszufluss-Ganglinien angereichert. Dieser Katalog bildet das stetig zunehmende Erfahrungswissen über das Zulaufverhalten der Pumpstation, und ist die Basis für eine Prognose des Zulaufverhaltens.

Das erfindungsgemäße Verfahren sieht nunmehr vor, dass anstelle der weit verbreiteten Zweipunktregelung (An/Aus) und anstelle der konventionellen Drehzahlregelung der Pumpe 2, eine Drehzahlregelung unter Berücksichtigung des Zulaufverhaltens in Form von Abwasser-Ganglinien erfolgt. Durch die erfindungsgemäße Anpassung der Drehzahlsteuerung an die Abwasser-Ganglinie kann die Abwasserpumpe 2 energieeffizienter betrieben werden.

Zunächst werden in Schritt S5 aus den abgespeicherten Zuflusswerten Referenzwerte bestimmt, die eine Referenzkurve R definieren. Diese Referenzkurve R bildet eine Referenz-Tageszufluss-Ganglinie. Die Referenzkurve R muss mindestens einen zeitlichen Rahmen besitzen, der einen beabsichtigten Optimierungszeitraum $T_{opt}$ umfasst.

Soll eine Optimierung der Drehzahl für einen Zeitraum von n Stunden gerechnet ab dem gegenwärtigen Zeit-

punkt $t_0$ erfolgen, muss also die Referenzkurve R mindestens diesen Optimierungszeitraum $T_{opt}$ umfassen, d.h. mindestens n Stunden in die Zukunft gehen. Eine optimale Steuerstrategie kann beispielsweise für einen Optimierungszeitraum $T_{opt}$ von 24 Stunden erfolgen, wobei die Zuflussprognose mittels der Referenzkurve ebenfalls mindestens 24 Stunden umfassen muss. Nachfolgend wird angenommen, dass der Optimierungszeitraum n = T-$t_0$ = 4 Stunden umfasst.

Zur Bestimmung, insbesondere zur Berechnung der Referenzkurve R wird beispielsweise zunächst festgestellt, welcher Wochentag gegenwärtig vorliegt und welcher Zeitpunkt gegenwärtig besteht. Rein Beispielhaft sei als aktueller Wochentag Donnerstag angenommen, und der gegenwärtige Zeitpunkt, als Uhrzeit ausgedrückt, sei 12 Uhr.

Es wird nun aus dem Datenspeicher 10 diejenige Tageszufluss-Ganglinie herausgesucht und verwendet, die genau vor einem Jahr gemessen wurde. Es werden also die ermittelten Zuflusswerte des 52 Wochen zurückliegenden Donnerstags aus dem Datenspeicher 10 geladen. Zusätzlich werden die Tageszufluss-Ganglinien der vergangenen m Tage, beispielsweise der vergangenen 20 Tage, geladen und auf den gleichen Messzeitpunkt bezogen gemittelt. Anschließend wird ein gewichtetes Mittel aus der ein Jahr zurückliegenden Tageszufluss-Ganglinie und den gemittelten letzten 20 Tageszufluss-Ganglinien bestimmt. Beispielsweise kann die ein Jahr zurückliegenden Tageszufluss-Ganglinie mit einem Faktor von 40% und die über den letzten Monat gemittelten Tageszufluss-Ganglinien mit einem Faktor von 60% gewichtet werden. Die Summe der so gewichteten Tageszufluss-Ganglinien bildet dann die Referenz-Tageszufluss-Ganglinien, d.h. die Referenzkurve R.

Eine solche Referenzkurve ist in Figur 3 dargestellt. Diese Referenzkurve R umfasst den zukünftigen Optimierungszeitraum $T_{opt}$, der hier von 12 Uhr bis 16 Uhr geht. Die Referenzkurve R stellt eine Prognosefunktion für den zu erwartenden Wassermengenzufluss $Q_{in}(t_i)$ in den Pumpensumpf (2). Für $t_i < t_0$ liegen die Prognosewerte allerdings bereits in der Vergangenheit, für $t_i \geq t_0$ in der Zukunft.

Anhand der prognostizierten Referenz-Tageszufluss-Ganglinie wird nun eine energieoptimale Steuerstrategie für die Pumpe berechnet. Hierzu werden die energieoptimalen Pegelstände (Wasserstände) $P_x(t_i)$ im Pumpensumpf 3 sowie die damit verbundenen Drehzahlen berechnet und als Referenz hinterlegt. Das hierfür verwendete mathematische Verfahren der dynamischen Optimierung nach Bellmann wird nachfolgend im Detail erläutert. Zunächst sei das Optimierungsverfahren jedoch kurz zusammengefasst.

Der betrachtete Optimierungszeitraum $T_{opt}$ = [$t_0$, T] wird in n Intervalle unterteilt. Ebenso werden für die Füllhöhe des Pumpensumpfes 3 diskrete Pegelstände P angenommen, siehe Figur 1. Betrachtet werden nun die Übergänge zwischen Pegelständen P von einem Zeitschritt $t_i$ zum nächsten Zeitschritt $t_{i+1}$. Um beispielsweise den Pegelstand P zu senken, muss effektiv, d.h. auch unter Berücksichtigung des Zuflusses, ein Volumenstrom $Q_{out}(t_i)$ aus dem Pumpensumpf 3 heraus gefördert werden. Hierzu ist ein Energieaufwand notwendig, der in der sogenannten Kostenfunktion berechnet wird. Für alle möglichen Übergänge von einem zum nächsten Zeitschritt werden die Aufwände mittels der Kostenfunktion bestimmt. Hieraus wird anschließend derjenige Weg identifiziert, auf dem vom Zeitpunkt 0 bis zum Zeitpunkt T die geringsten Kosten entstehen.

Aufgabe des Optimierungsverfahrens ist es, ein Optimierungsproblem zu lösen. Hier geht es beispielsweise um die Minimierung des Energieverbrauchs, bzw. der Energiekosten.

Hierzu wird der zu betrachtende Optimierungszeitraum $T_{opt}$ = [$t_0$, T] in n Intervalle unterteilt, wobei hier nur zu Erklärungszwecken beispielhaft drei Intervalle verwendet sind. In der Praxis wird eine weitaus größere Anzahl von Intervallen, insbesondere in Abhängigkeit der Länge des Optimierungszeitraums $T_{opt}$ verwendet. So können beispielsweise 20, 30 oder 60 Intervalle pro Stunde verwendet werden. Zur Vereinfachung des Verfahrens wird angenommen, dass der Wassermengenzufluss $Q_{in}(t_i)$, die Drehzahl $n(t_i)$ und die Fördermenge $Q_{out}(t_i)$ in jedem Intervall konstant sind.

Zur Vergleichmäßigung der Förderströme $Q_{out}(t_i)$ kann in der Kostenfunktion ein Term $(Q_{out}(t_i) - Q_{out,ref}(t_i))^2$ addiert werden, der in jedem Zeitabschnitt eine große Abweichung der Förderströme $Q_{out}(t_i)$ zu einer Referenzförderstromganglinie $Q_{out,ref}(t_i)$ bestraft.

Für den Erhalt der Referenzförderstromganglinie $Q_{out,ref}(t_i)$ wird der Förderstrom $Q_{out}(t_i)$ der Pumpe 2 über der Zeit erfasst und abgespeichert, insbesondere zu diskreten Zeitpunkten $t_i$ und/ oder für diskrete Zeiträume. Man erhält auf diese Weise für die Vergangenheit eine aus den diskreten Förderstromwerten bestehende Ganglinie (Kurve). Die Referenzförderstromganglinie $Q_{out,ref}(t_i)$ kann aus dieser Förderstromganglinie gewonnen werden, indem aus ihr derselbe zeitliche Ausschnitt ausgeschnitten wird, der für den Erhalt der Referenzzuflussganglinie aus der Zuflussganglinie herausgeschnitten wurde. Dies war im obigen Beispiel ein einem abgeschlossenen Tag entsprechender Zeitraum von 24 Stunden, der 52 Wochen zurücklag. Die Referenzförderstromganglinie $Q_{out,ref}(t_i)$ kann ferner wie im Falle der Referenzzuflussganglinie, bzw. der Referenz-Tageszufluss-Ganglinien über zwei oder mehrere gleichartige Tage gemittelt werden bzw. gemittelt sein.

Es wird nun ein Zustandsbaum der Pumpstation 1 gebildet. Der Zustand der Pumpstation 1 ist durch ihre Füllhöhe, d.h. ihrem Pegelstand P definiert. Zu Beginn des Optimierungszeitraums $T_{opt}$, d.h. zum Zeitpunkt $t_0$, ist der Pegelstand $P(t_0)$ bekannt, beispielsweise durch Messung mittels des Füllstandssensors 11. Er beträgt, ausgedrückt in Prozent, bei dem Beispiel in Figur 1 0,7.

Zunächst kann auch eine Festlegung einer Anzahl diskreter Pegel P erfolgen, die überhaupt realisiert werden können. In Figur 1 sind Pegelstände in Schritten von 10% bezogen auf die maximale Füllhöhe $P_{max}$ = 100% angegeben.

Eine vollständige Entleerung des Pumpensumpfes 3 ist aufgrund des Pumpenuntergestells und der Ansauggeometrie der Pumpe nicht möglich. Daher existiert ein minimal erreichbarer Pegel $P_{min}$, der hier beispielhaft bei 15% liegt.

Es werden für jedes Zeitintervall $t_0$ bis $t_1$, $t_1$ bis $t_2$ und $t_2$ bis $t_3$ nun alle Pegelstände $P_x(t_i)$ mit i = 1, 2, 3 ermittelt, die in dem entsprechenden Zeitintervall theoretisch erreicht werden können. Zur Vereinfachung der Problemlösung kann hier eine endliche Zahl angenommen werden. Rein beispielhaft sind die möglichen Pegelstände in den Figuren 2a bis 2d dargestellt. Danach können -je nach Betriebsleistung der Pumpe- am Ende des ersten Zeitintervalls, d.h. zum Zeitpunkt $t_1$ drei Pegelstände erreicht werden, nämlich $P_1(t_1)$ = 0,6; $P_2(t_1)$ = 0,7 und $P_3(t_1)$ = 0,8. Am Ende des zweiten Zeitintervalls, d.h. zum Zeitpunkt $t_2$ können vier Pegelstände erreicht werden, nämlich $P_1(t_2)$ = 0,6; $P_2(t_2)$ = 0,7, $P_3(t_2)$ = 0,8 und $P_4(t_2)$ = 0,9. Am Ende des dritten Zeitintervalls, d.h. zum Zeitpunkt $t_3$ können zwei Pegelstände erreicht werden, nämlich $P_1(h)$ = 0,7 und $P_2(t_3)$ = 0,8.

Die Bestimmung der erreichbaren Pegelstände $P_x(t_i)$ erfolgt unter Berücksichtigung des prognostizierten Wassermengenzuflusses $Q_{in}(t_i)$ mit i = 1, 2, 3 in allen Zeitintervallen und der Wassermenge $Q_{out}(t_i)$, die die Pumpe pro Stunde abpumpen kann. Dabei wird auch berücksichtigt, dass die Pumpe 2 während eines Zeitintervalls ausgeschaltet sein kann.

Darüber hinaus können und sollten für die Bestimmung der erreichbaren Pegelstände $P_x(t_i)$ verschiedene Nebenbedingungen beachtet werden. Hiervon sind beispielhaft nachfolgend einige genannt:

- es sollte ein Maximalpegel $P_{max}$ nicht überschritten werden, damit der Pumpensumpf nicht überläuft, und/ oder ein Minimalpegel $P_{min}$ nicht unterschritten werden, damit die Pumpe 2 nicht leer läuft (gegebenenfalls werden dann Lager nicht mehr geschmiert);

- es darf/kann der maximale Förderstrom $Q_{out,max}$ der Pumpe nicht überschritten und der minimale Förderstrom $Q_{out, min}$ der Pumpe 2 nicht unterschritten werden; diese Grenzwerte sind beispielsweise durch die Pumpe selbst bedingt und vom Pumpenhersteller vorgeben. Beim maximalen Förderstrom kann auch maximal erlaubte oder maximal mögliche Fließgeschwindigkeit im Ablauf 5 berücksichtigt werden;

- es kann die maximale mechanische Drehzahl $n_{max}$ der Pumpe nicht überschritten und die minimal erreichbare Drehzahl $n_{min}$ der Pumpe 2 nicht unterschritten werden; dabei kann als maximale Drehzahl auch diejenige Drehzahl berücksichtigt werden, bei der die Pumpe 2 kavitiert (NPSH-Wert);

- Differenzengleichung zur Berücksichtigung sich ändernder Pegel bei Abwasserzufluss und/oder Abwasserabfluss. Die zu bestimmenden optimalen Förderströme $Q_{out}(t_i)$, aus denen schließlich die Drehzahl berechnet werden kann, müssen diese Gleichung in jedem Zeitschritt $t_i$ erfüllen;

Anschließend werden alle Pegelzustandsübergänge in jedem Zeitintervall bestimmt, die tatsächlich erreicht werden können. Auch diese Bestimmung ist von wenigstens einer der zuvor genannten Förderstromrestriktionen abhängig. So können beispielsweise von dem Pegelzustand $P_1(t_1)$ = 0,6 nicht die Pegelzustände $P_3(t_2)$ = 0,8 und $P_4(t_2)$ = 0,9 und von dem Pegelzustand $P_2(t_1)$ = 0,7 nicht der Pegelzustand $P_4(t_2)$ = 0,9 erreicht werden, weil in dem zweiten Zeitintervall $t_1$ bis $t_2$ laut des prognostizierten Wassermengenzuflusses nicht so viel Wasser in den Pumpensumpf zuläuft. Zu allen anderen Pegelständen sind dagegen Übergänge möglich.

Jedem Pegelzustandsübergang wird dann ein Kostenwert zugeordnet. Der Kostenwert ist abhängig von der Definition der Kostenfunktion, d.h. davon, wie die Energiekosten $E_i$ berechnet werden. Der Kostenwert beziffert diejenigen Energiekosten $E_i$, die erforderlich sind, um ausgehend von einem Startpegel $P(t_{i-1})$ (Anfangswasserstand) einen bestimmten Zielpegel $P(t_i)$ (Anfangswasserstand) zu erreichen. Der jeweilige Kostenwert bestimmt sich wie folgt:

Es wird der Förderstrom $Q_{out}(t_i)$ berechnet aus der Differenzengleichung

$$Q_{in}(t_i) - Q_{out}(t_i) = A \frac{P(t_i) - P(t_{i-1})}{\Delta t_i},$$

wobei der Zufluss $Q_{in}(t_i)$ aus der Referenzkurve R bekannt ist. $P(t_{i-1})$ stellt den Startpegel, $P(t_i)$ den Zielpegel dar. A ist die Grundfläche des Pumpensumpfs 3. $\Delta t_i$ ist die Dauer des Zeitintervalls,

$$\Delta t_i = t_i - t_{i-1}.$$

Aus dem Pumpenkennfeld

$$(H_{pump}(Q_{out}(t_i), n(t_i)) = (\frac{n(t_i)}{n_0})^2 a_0 + \frac{n(t_i)}{n_0} a_1 Q_{out}(t_i) + a_2(Q_{out}(t_i))^2)$$

und dem Rohrkennfeld

$$(H_{pipe}(Q_{out}(t_i), P(t_{i-1})) = d_0 - P(t_{i-1}) + d_1 Q_{out}(t_i) + d_2(Q_{out}(t_i))^2),$$

die sich bei dem ermittelten Zufluss $Q_{out}(t_i)$ schneiden, ergibt sich für jeden Pegelzustandsübergang eine diesem zuge-ordnete, einzustellende Drehzahl $n(t_i)$ gemäß:

$$n(t_i)$$

$$:= \frac{n_0}{2a_0}(-a_1 Q_{out}(t_i)$$

$$+ \sqrt{4a_0(d_0 - P(t_{i-1})) + d_1 Q_{out}(t_i) + (d_2 - a_2)(Q_{out}(t_i))^2 + a_1^2(Q_{out}(t_i))^2})$$

wobei in den genannten Gleichungen $a_0$, $a_1$ und $a_2$ die Koeffizienten des Polynoms zweiten Grades sind, das die Pumpenkennlinie bei Nenndrehzahl $n_0$ beschreibt, und $d_0$, $d_1$ und $d_2$ die Koeffizienten des Polynoms zweiten Grades sind, das die Rohrkennlinie beschreibt. $d_0$ ist der Höhenunterschied zwischen dem Pumpensumpfboden und dem höchsten Punkt der angeschlossenen Druckrohrleitung, vermindert um den Radius der Druckrohrleitung 6, siehe Figur 1.

Wird die berechnete Drehzahl $n(t_i)$ für die Dauer des Zeitintervalls $\Delta t_i$ an der Pumpe 2 eingestellt, führt dieser Betrieb zu Energiekosten $E_i$, d.h. einem Kostenwert, der vorzugsweise mit der folgenden Kostenfunktion bestimmt wird:

$$E_i := \frac{1}{\eta_{FU}}\Delta t_i((\frac{n(t_i)}{n_0})^3 b_0 + (\frac{n(t_i)}{n_0})^2 b_1 Q_{out}(t_i) + \frac{n(t_i)}{n_0} b_2(Q_{out}(t_i))^2$$

$$+ b_3(Q_{out}(t_i))^3)p_i$$

In der vorstehenden Kostengleichung sind $b_0$, $b_1$, $b_2$ und $b_3$ die Koeffizienten des Polynoms dritten Grades, das die Leistungskennlinie der Pumpe 2 bei Nenndrehzahl $n_0$ beschreibt. $p_i$ ist der Arbeitspreis in dem betrachteten Zeitintervall $t_i$, d.h. der Strompreis. $\eta_{FU}$ ist der Wirkungsgrad des Frequenzumrichters des Elektromotors 2b.

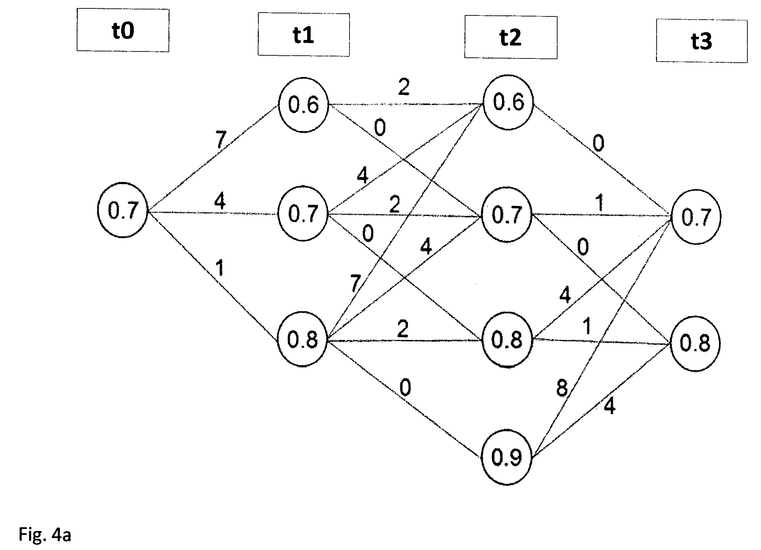

Beispielsweise auf der Grundlage der genannten Gleichungen kann jedem Pegelzustandsübergang ein Kostenwert zugeordnet werden. Berechnete Kostenwerte sind in Figur 4a eingetragen. So besitzt beispielsweise der Pe-gelzustandsübergang von $P(t_0)$ zu $P_1(t_1)$ einen Energieaufwand $E_1$ von 7, der Übergang von $P(t_0)$ zu $P_2(t_1)$ einen Energieaufwand E von 4 und der Übergang von $P(t_0)$ zu $P_3(t_1)$ einen Energieaufwand $E_1$ von 1. Bei dem Pegelübergang $P(t_0)$ zu $P_2(t_1)$ fördert die Pumpe 2 gerade so viel Wasser aus dem Pumpensumpf 3 wie zufließt. Bei dem Pegelübergang $P_3(t_1)$ zu $P_4(t_2)$ wird deutlich, dass die Pumpe 2 ausgeschaltet wäre. Hier ist der Energieaufwand null. In dem zweiten Zeitintervall $\Delta t_2 = t_2 - t_1$ fließt dann gerade so viel Wasser in den Pumpensumpf 3 hinzu, dass der Füllstand um 10% steigt.

Gesucht wird nun in jedem Zeitintervall diejenige Drehzahl bzw. derjenige Förderstrom, der die Gesamtkosten, d.h. die Kosten über den gesamten Optimierungszeitraum minimiert. Die Suche des Weges mit den minimalen Kosten erfolgt vorzugsweise wie folgt:

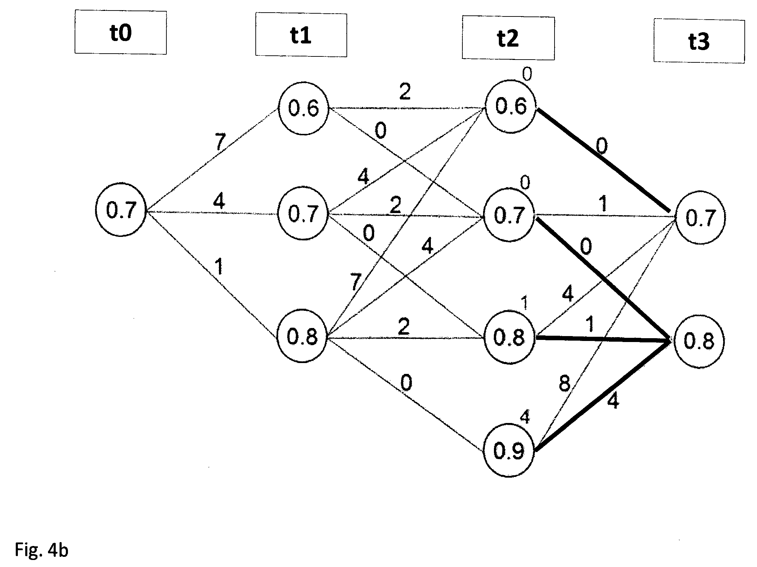

Es wird bei dem letzten Zeitintervall $\Delta t_3$ begonnen, d.h. hier bei dem Zeitpunkt $t_2$ der letzten Startpegel $P_x(t_2)$, x = 1, 2, 3, 4. Für jeden dieser Pegel $P_x(t_2)$, x = 1, 2, 3, 4 des Anfangszeitpunktes $t_2$ wird derjenige Folgepegel $P_x(t_3)$, x = 1, 2 mit den minimalen Übergangskosten ermittelt, siehe Figur 4b. Bei dem Pegel $P_1(t_2)$ ist nur ein einziger Zustandsübergang möglich, so dass hier die minimalen Überkosten die Kosten dieses Zustandsübergangs sind; sie betragen null. Bei dem Pegel $P_2(t_2)$ sind Übergänge zu $P_1(t_3)$ und $P_2(t_3)$ möglich mit Energiekosten von 1 ($P_2(t_2)$ und $P_1(t_3)$) und 0 ($P_2(t_2)$ und $P_2(t_3)$). Der Übergang $P_2(t_2)$ und $P_2(t_3)$ führt hier zu geringeren Kosten. Ausgehend von $P_3(t_2)$ besitzt der Übergang zu $P_2(t_3)$ die geringeren Kosten, hier 1. Und ausgehend von $P_4(t_2)$ besitzt der Übergang zu $P_2(t_3)$ die geringeren Kosten, hier 4. Die identifizierten Minimalkosten können den Pegelzuständen $P_x(t_2)$, x = 1, 2, 3, 4 zugeordnet gespeichert werden. In Figur 4b sind die Minimalkosten über die rechts oberhalb der Pegelzustände angezeigt.

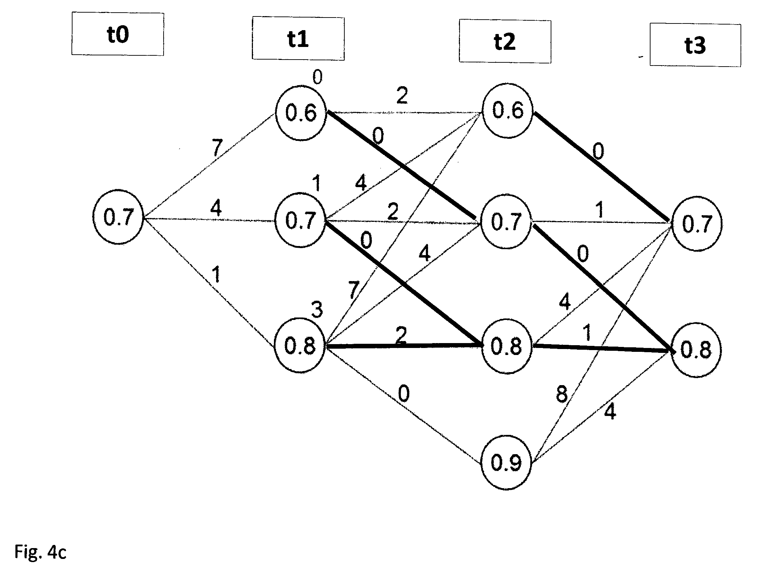

Anschließend wird zu dem vorletzten Zeitintervall $\Delta t_2$ gegangen, d.h. hier bei dem Zeitpunkt $t_1$ der vorletzten Startpegel $P_x(t_1)$, x = 1, 2, 3 begonnen. Für jeden dieser Pegel $P_x(t_1)$, x = 1, 2, 3 des Anfangszeitpunktes $t_1$ wird derjenige Folgepegel $P_x(t_2)$, x = 1, 2, 3, 4, mit den minimalen Übergangskosten ermittelt, siehe Figur 4c. Diese Übergangskosten ergeben sich aus der Summe der direkten Übergangskosten zum Folgezustand (hier: $t_2$) und den ab diesem Folgezustand nötigen Übergangskosten, welche in dem vorherigen Schritt bereits berechnet worden sind.

Beispielsweise sind vom Zustand $P_3(t_1)$ = 0,8 zu allen vier Pegelständen $P_x(t_2)$, x = 1, 2, 3, 4 des nächsten Zeitpunktes Übergänge möglich. Der Übergang zu $P_1(t_2)$ = 0,6 erfordert Energiekosten von 7, addiert mit den minimalen Übergangskosten von $P_1(t_2)$ = 0,6 (hier = 0) ergeben sich Gesamtkosten von 7. Der Übergang zu $P_2(t_2)$ = 0,7 erfordert Energiekosten von 4, addiert mit den minimalen Übergangskosten von $P_2(t_2)$ = 0,7 (hier = 0) ergeben sich Gesamtkosten von 4. Der Übergang zu $P_3(t_2)$ = 0,8 erfordert Energiekosten von 2, addiert mit den minimalen Übergangskosten von $P_3(t_2)$ = 0,8 (hier = 1) ergeben sich Gesamtkosten von 3. Der Übergang zu $P_4(t_2)$ = 0,9 erfordert Energiekosten von 0, addiert mit den minimalen Übergangskosten von $P_4(t_2)$ = 0,9 (hier = 4) ergeben sich Gesamtkosten von 4. Dies bedeutet, dass der Übergang von $P_3(t_1)$ = 0,8 zu dem Zustand $P_3(t_2)$ = 0,8 minimale Gesamtkosten (hier 3) besitzt, siehe Figur 4c.

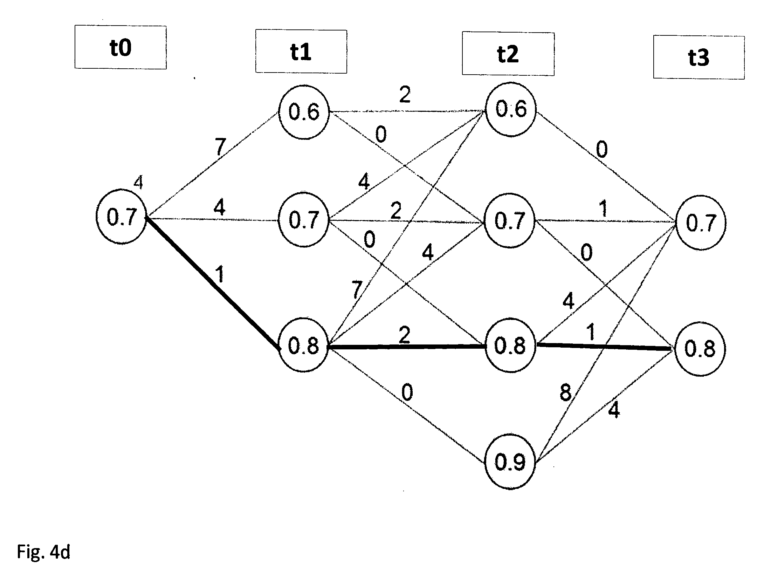

Diese Vorgehensweise wird nun bei dem vorvorletzten Zeitintervall $\Delta t_1$ wiederholt. Es ergibt sich dann ein minimaler Gesamtaufwand von 4, siehe Figur 4d.

Dieses rekursive Verfahren wird nun solange durchgeführt, bis das erste Zeitintervall erreicht ist. In dem hier erläuterten Beispiel, ist das vorvorletzte Zeitintervall das erste Zeitintervall, so dass das Verfahren hier beendet ist. Der identifizierte Weg, der die geringsten Gesamtkosten besitzt und damit eine optimale Folge der Wasserstände beschreibt, verläuft vom aktuellen Pegel $P(t_0)$ = 0,7 über den Pegel $P_3(t_1)$ = 0,8 und über den Pegel $P_3(t_2)$ zum Pegel $P_2(t_3)$ = 0,8. Da zuvor für jeden Pegelübergang bzw. für jede Pegelzustandsänderung eine Drehzahl $n(t_i)$ berechnet worden ist, diese Drehzahlen $n(t_i)$ also bereits vorliegen, können die den Pegelzustandsänderungen auf dem identifizierten Weg zuge-ordneten Drehzahlen $n(t_i)$ nacheinander eingestellt werden.

Es ist jedoch zu beachten, dass die Zuflussprognose im Regelfall nicht oder zumindest nicht genau eintreten wird, weil nicht-deterministische Ereignisse, wie beispielsweise Niederschlag eine Rolle spielen. Aus diesem Grund ist es von Vorteil, Anpassungen und/ oder Korrekturen der energieoptimalen Steuerstrategie vorzunehmen. Dies kann beispielsweise wie folgt erfolgen:

Zunächst wird der identifizierte energieoptimale/ energieminimale Weg von Pegelstand zu Pegelstand als Folge von Referenzpegeln $P_{ref}$ verwendet, d.h. gespeichert. Eine solche Referenz-Pegellinie liegt also für den Optimierungs-zeitraum $T_{opt}$ hier beispielsweise 24 Stunden vor.

Eine Abweichung des aktuellen Pegelstandes $P(t_i)$ von dem Referenzpegelstand $P_{ref}(t_i)$ zum aktuellen Zeitpunkt $t_i$ kann als Eingangsgröße eines Reglers dienen, der die Höhe einer Drehzahlkorrektur $\Delta n(t_i)$ bestimmt, um den aktuellen Pegelstand $P(t_i)$ an den Referenzpegelstand $P_{ref}(t_i)$ anzunähern. Dies kann beispielsweise mittels der folgenden Glei-chung erfolgen: $\Delta n(t_i) = k_P (P(t_i)-P_{ref}(t_i))$, wobei kp eine Regelungskonstante ist. Die Regelungskonstante $k_P$ kann beispielsweise den Wert $k_P$ =3000min$^{-1}$/100% annehmen. Die so bestimmte Drehzahlkorrektur $\Delta n(t_i)$ kann dann zu der zuvor mittels des numerischen Optimierungsverfahrens berechneten Drehzahl $n(t_i)$ addiert werden. Sofern die sich dann ergebende Drehzahl eine maximale oder minimale Drehzahlgrenze über- oder unterschreitet und/oder die eine Stellbereichsgrenze des Reglers über- oder unterschritten wird kann die einzustellende Drehzahl entsprechend auf die maximale oder die minimale Drehzahl bzw. auf die entsprechende Stellbereichsgrenze des Reglers limitiert, d.h. eingestellt werden.

**Patentansprüche**

1. Verfahren zum Betreiben einer Pumpstation (1), insbesondere einer Abwasserpumpstation, welche einen Pumpensumpf (3) mit wenigstens einem Zulauf (4) und wenigstens einem Ablauf (5) und zumindest eine in diesem Pumpensumpf (3) angeordnete, in ihrer Drehzahl regelbare Pumpe (2) umfasst, wobei

   - über einen fortschreitenden Zeitraum die über den Zulauf (4) in den Pumpensumpf (3) zufließende Wasser-menge pro Zeiteinheit ($Q_{in}(t_i)$) ermittelt und als Zuflusswerte in einem Datenspeicher (10) abgespeichert wird,
   - aus den abgespeicherten Zuflusswerten Referenzwerte bestimmt werden, die eine einen zukünftigen Opti-mierungszeitraum ($T_{opt}$) umfassende Referenzkurve (R) als Prognose für einen zu erwartenden Wassermen-genzufluss ($Q_{in}(t_i)$, $t_i \geq t_0$) in den Pumpensumpf (2) definieren, **dadurch gekennzeichnet, dass**
   - unter Anwendung eines numerischen Optimierungsverfahrens für den Optimierungszeitraum ($T_{opt}$) zumindest eine erste Drehzahleinstellung ($n(t_0)$) für die Pumpe (2) ermittelt wird, die im Hinblick auf zumindest eine be-stimmte Optimierungsgröße ($E_i$) und zumindest ein mit dieser verbundenes Optimierungsziel ausgehend von dem aktuellen Pegelstand ($P(t_0)$) in dem Pumpensumpf (3) und dem prognostizierten Wassermengenzufluss ($Q_{in}(t_i)$, $t_i \geq t_0$) innerhalb des Optimierungszeitraumes ($T_{opt}$) für das Erreichen eines Zwischenpegelstandes ($P(t_0 + i \cdot \Delta t_i)$) oder Endpegelstands ($P(t_0 + T_{opt})$) innerhalb oder am Ende des Optimierungszeitraumes ($T_{opt}$) optimal

ist, und
- die Pumpe (2) mit der ermittelten Drehzahleinstellung ($n(t_0)$) betrieben wird.

2. Verfahren nach Anspruch 1, **dadurch gekennzeichnet, dass** die Abspeicherung der Zuflusswerte tagesbezogen und/ oder wochentagesbezogen erfolgt.

3. Verfahren nach Anspruch 2, **dadurch gekennzeichnet, dass** die Referenzkurve (R) ausgehend von dem aktuellen Tag, insbesondere dem aktuellen Wochentag bestimmt wird, wobei diejenigen Zuflusswerte eines vergleichbaren Tages als Referenzkurve (R), insbesondere eines dem aktuellen Wochentag entsprechenden Wochentages verwendet werden.

4. Verfahren nach einem der vorherigen Ansprüche, **dadurch gekennzeichnet, dass** die Referenzkurve (R) aus denjenigen Zuflusswerte eines Tages gebildet ist, der einen oder mehrere Tage zurückliegt, oder der einen oder mehrere Wochen, insbesondere vier Wochen oder 52 Wochen, zurückliegt und seiner Benennung nach identisch dem aktuellen Wochentag ist.

5. Verfahren nach einem der Ansprüche 1 bis 3, **dadurch gekennzeichnet, dass** die Referenzkurve (R) aus auf den gleichen Zeitpunkt bezogen gemittelten Zuflusswerten mehrerer Tage gebildet ist, insbesondere aus einer Anzahl unmittelbar vergangener Tage, oder aus einer Anzahl ihrer Benennung nach gleicher Wochentage oder einer Anzahl aufeinander folgender Werktage oder aufeinanderfolgender Wochenendtage.

6. Verfahren nach einem der Ansprüche 1 bis 3, **dadurch gekennzeichnet, dass** die Referenzkurve (R) aus einem gewichteten Mittel gebildet ist aus

- einerseits denjenigen Zuflusswerten eines bestimmten Tages, der einen oder mehrere Tage zurückliegt, oder der einen oder mehrere Wochen zurückliegt und seiner Benennung nach identisch dem aktuellen Wochentag ist, und
- andererseits den gleichen Zeitpunkt bezogen gemittelten Zuflusswerten mehrerer Tage, insbesondere aus einer Anzahl unmittelbar vergangener Tage, oder aus einer Anzahl ihrer Benennung nach gleicher Wochentage oder einer Anzahl aufeinander folgender Werktage oder aufeinanderfolgender Wochenendtage.

7. Verfahren einem der vorherigen Ansprüche, **dadurch gekennzeichnet, dass** die Referenzkurve einen Zeitraum von 24 Stunden umfasst.

8. Verfahren nach Anspruch 7, **dadurch gekennzeichnet, dass** der 24 Stunden-Zeitraum um 0 Uhr des gegenwärtigen Tages beginnt und dass diejenigen Referenzwerte der Referenzkurve (R), die ihrem jeweiligen Zeitpunkt in der Referenzkurve (R) nach an dem gegenwärtigen Tag bereits Zuflusswerten entsprechen, mit diesen Zuflusswerten verglichen werden, wobei eine Korrektur der Referenzkurve im Falle einer Abweichung erfolgt.

9. Verfahren nach einem der vorherigen Ansprüche, **dadurch gekennzeichnet, dass** die Ermittlung der über den Zulauf (4) in den Pumpensumpf (3) zufließenden Wassermenge pro Zeiteinheit ($Q_{in}(t_i)$) über einen 24 Stunden Zeitraum von 0 Uhr bis 24 Uhr erfolgt und während der Anwendung des Optimierungsverfahrens fortgesetzt wird.

10. Verfahren nach einem der vorherigen Ansprüche, **dadurch gekennzeichnet, dass** die Zuflusswerte als abgeschlossener tagesbezogener und/ oder wochentagesbezogener Datensatz, oder als kontinuierliche endlose Datenreihe abgespeichert werden.

11. Verfahren nach einem der vorherigen Ansprüche, **dadurch gekennzeichnet, dass** als Optimierungsverfahren das Bellmansche Optimalitätsprinzips der dynamischen Optimierung verwendet wird, wobei der optimale Drehzahlverlauf ($n(t_i)$) im Hinblick darauf berechnet wird, dass der Energieverbrauch ($E_i$) der Pumpe (2) minimiert wird.

12. Verfahren nach Anspruch 11, **dadurch gekennzeichnet, dass** die Anwendung des Optimierungsverfahrens derart erfolgt, dass der Optimierungszeitraum ($T_{opt}$) in eine Vielzahl von Zeitschritten ($t_i$) unterteilt wird und für jeden Zeitschritt ($t_i$) bestimmt wird, welche diskreten Zwischenpegelstände ($P_x(t_i)$) in dem Pumpensumpf (3) in diesem Zeitschritt ($t_i$) durch den Betrieb der Pumpe (2) unter Berücksichtigung des prognostizierten Wassermengenzuflusses ($Q_{in}(t_i)$) erreichbar sind, wobei für alle möglichen Übergänge von Pegelständen ($P_x(t_i)$) von jedem Zeitschritt ($t_i$) zu dem nächsten Zeitschritt ($t_{i+1}$) ein Energieaufwand ($E_i$) berechnet wird und anschließend derjenige Weg vom Pegelstand ($P_A(t_0)$) bei dem ersten Zeitschritt ($t_0$) zu einem Endpegelstand ($P_E(t_n)$) im letzten Zeitschritt ($t_n$) des Opti-

mierungszeitraums ($T_{opt}$) bestimmt wird, der den geringsten Energieaufwand ($E_{min}$) aufweist, und dass die Drehzahl ($n(t_0)$) der Pumpe (2) für das gegenwärtige Zeitintervall ($t_0$) so eingestellt wird, dass der auf dem identifizierten Weg liegende Pegelstand ($P_x(t_1)$) des nächsten Zeitintervalls ($t_1$) erreicht wird.

**13.** Verfahren nach Anspruch 12, **dadurch gekennzeichnet, dass** die Bestimmung des Energieaufwandes ($E_i$) mittels einer Kostenfunktion erfolgt.

**14.** Verfahren nach einem der vorherigen Ansprüche, **dadurch gekennzeichnet, dass** das Optimierungsverfahren in zeitlichen Abständen, insbesondere nach Ablauf des Optimierungszeitraums ($T_{opt}$) und/ oder für jeden Zeitschritt ($t_i$) wiederholt wird.

**15.** Verfahren nach einem der Ansprüche 12 bis 14, **dadurch gekennzeichnet, dass** für die Bestimmung der erreichbaren Zwischenpegelstände ($P_x(t_i)$) wenigstens eine Nebenbedingung berücksichtigt wird, insbesondere ein Maximalpegel ($P_{max}$) und/ oder ein Minimalpegel ($P_{min}$), ein maximaler Förderstrom ($Q_{out,max}$) und/ oder ein minimaler Förderstrom ($Q_{out,min}$), und/ oder eine maximale Drehzahl ($n_{max}$) des Pumpenaggregats.

**16.** Verfahren nach einem der vorherigen Ansprüche, **dadurch gekennzeichnet, dass** der Pumpensumpf (3) in zeitlichen Abständen, vorzugsweise regelmäßig, bis zu einem Minimalpegel ($P_{min}$) entleert wird, insbesondere wenn zumindest eine Bedingung vorliegt.

**17.** Verfahren nach einem der vorherigen Ansprüche, **dadurch gekennzeichnet, dass** in zeitlichen Abständen, vorzugsweise regelmäßig, ein Spülvorgang durchgeführt wird, bei dem ein Maximalförderstrom ($Q_{max}$) bei der Pumpe (2) eingestellt wird, insbesondere wenn zumindest eine Bedingung vorliegt.

**18.** Verfahren nach einem der vorherigen Ansprüche, **dadurch gekennzeichnet, dass** ein Spülvorgangs, bei dem ein Maximalförderstrom ($Q_{max}$) bei der Pumpe (2) eingestellt wird, dann ausgeführt wird, wenn bei einem bestimmten Förderstrom ein zuvor festgelegter Referenzenergieverbrauch, insbesondere eine bestimmte Referenzstrom- oder Referenzleistungsaufnahme der Pumpe (2) um einen bestimmten Wert überschritten wird.

**19.** Verfahren nach einem der vorherigen Ansprüche, **dadurch gekennzeichnet, dass** der Zufluss ($Q_{in}(t_i)$) aus den Pegeländerungen ($P(t_i)$ - $P(t_{i-1})$) im Pumpensumpf (3) und dem Förderstrom ($Q_{out}(t_i)$) der Pumpe (2) berechnet wird.

**Claims**

**1.** Method for operating a pumping station (1), in particular a waste water pumping station, which comprises a pump sump (3) having at least one inlet (4) and at least one outlet (5) and at least one variable-rotational speed pump (2) arranged in the said pump sump (3),

   - over a progressive time period, the volume of water per unit of time ($Q_{in}(t_i)$) flowing into the pump sump (3) via the inlet (4) is determined and is stored in a data memory (10) as inflow values,
   - the stored inflow values are used to determine reference values which define a reference curve (R) covering a future optimization time period ($T_{opt}$) as a forecast for an expected water inflow volume ($Q_{in}(t_i)$, $t_i \geq t_0$) into the pump sump (2),
   **characterized in that**
   - by applying a numerical optimization method for the optimization time period ($T_{opt}$), at least a first rotational speed setting ($n(t_0)$) for the pump (2) is determined which, with regard to at least one determined optimization variable ($E_i$) and at least one optimization target connected thereto, starting from the current level ($P(t_0)$) in the pump sump (3) and the forecast water inflow volume ($Q_{in}(t_i)$, $t_i \geq t_0$) within the optimization time period ($T_{opt}$), is optimal to achieve an intermediate level ($P(t_0+i \cdot \Delta t_i)$) or final level ($P(t_0+T_{opt})$) within or at the end of the optimization time period ($T_{opt}$), and
   - the pump (2) is operated with the rotational speed setting ($n(t_0)$) that is determined.

**2.** Method according to Claim 1, **characterized in that** the inflow values are stored on a daily basis and/or weekday basis.

**3.** Method according to Claim 2, **characterized in that** the reference curve (R) is determined starting from the current day, in particular the current weekday, those inflow values from a comparable day being used as reference curve (R), in particular from a weekday corresponding to the current weekday.

4. Method according to one of the preceding claims, **characterized in that** the reference curve (R) is formed from those inflow values from a day which lies one or more days back or which lies one or more weeks back, in particular four weeks or 52 weeks back, and has the same name as the current weekday.

5. Method according to one of Claims 1 to 3, **characterized in that** the reference curve (R) is formed from inflow values of a plurality of days determined with reference to the same time, in particular from a number of immediately preceding days or from a number of weekdays with the same name or from a number of successive working days or successive weekend days.

6. Method according to one of Claims 1 to 3, **characterized in that** the reference curve (R) is formed from a weighted mean formed from

   - firstly those inflow values from a specific day which lies one or more days back, or which lies one or more weeks back and the has the same name as the current weekday, and
   - secondly, inflow values from a plurality of days determined with reference to the same time, in particular from a number of immediately preceding days, or from a number of weekdays with the same name or from a number of successive working days or successive weekend days.

7. Method according to one of the preceding claims, **characterized in that** the reference curve covers a time period of 24 hours.

8. Method according to Claim 7, **characterized in that** the 24-hour time period begins at 0 hours on the present day, and **in that** those reference values from the reference curve (R) which, according to their respective time in the reference curve (R), already correspond to inflow values on the present day, are compared with these inflow values, a correction being made to the reference curve in the event of a deviation.

9. Method according to one of the preceding claims, **characterized in that** the determination of the volume of water per unit of time ($Q_{in}(t_i)$) flowing into the pump sump (3) via the inlet (4) is carried out over a 24-hour time period from 0 hours to 24 hours and is continued during the application of the optimization method.

10. Method according to one of the preceding claims, **characterized in that** the inflow values are stored as a completed day-based and/or weekday-based data set or as a continuous endless data series.

11. Method according to one of the preceding claims, **characterized in that** the optimization method used is the Bellman optimality principle of dynamic optimization, the optimal rotational speed profile ($n(t_i)$) being calculated with regard to the energy consumption ($E_i$) of pump (2) being minimized.

12. Method according to Claim 11, **characterized in that** the optimization method is applied in such a way that the optimization time period ($T_{opt}$) is subdivided into a multiplicity of time steps ($t_i$) and, for each time step ($t_i$), a determination is made as to which intermediate levels ($P_x(t_i)$) in the pump sump (3) can be achieved in this time step ($t_i$) by means of the operation of the pump (2) by taking into account the forecast water inflow volume ($Q_{in}(t_i)$), an energy expenditure ($E_i$) being calculated for all the possible changes of levels ($P_x(t_i)$) from each time step ($t_i$) to the next time step ($t_{i+1}$), and then that path from the level ($PA(t_0)$) at the first time step ($t_0$) to a final level ($P_E(t_n)$) at the last time step ($t_n$) of the optimization time period ($T_{opt}$) which has the lowest energy expenditure ($E_{min}$) being calculated, and **in that** the rotational speed ($n(t_0)$) of the pump (2) for the current time interval ($t_0$) is set such that the level ($P_x(t_1)$) of the next time interval ($t_1$) lying on the identified path is reached.

13. Method according to Claim 12, **characterized in that** the energy expenditure ($E_i$) is determined by means of a cost function.

14. Method according to one of the preceding claims, **characterized in that** the optimization method is repeated at time intervals, in particular after expiry of the optimization time period ($T_{opt}$) and/or for each time step ($t_i$).

15. Method according to one of Claims 12 to 14, **characterized in that**, for the determination of the achievable intermediate levels ($P_x(t_i)$), at least one secondary condition is taken into account, in particular a maximum level ($P_{max}$) and/or a minimum level ($P_{min}$), a maximum delivery flow ($Q_{out,max}$) and/or a minimum delivery flow ($Q_{out,min}$) and/or a maximum rotational speed ($n_{max}$) of the pump unit.

16. Method according to one of the preceding claims, **characterized in that** the pump sump (3) is emptied down to a minimum level ($P_{min}$) at time intervals, preferably regularly, in particular when at least one condition is present.

17. Method according to one of the preceding claims, **characterized in that** a flushing operation is carried out at time intervals, preferably regularly, in which a maximum delivery flow ($Q_{max}$) is set at the pump (2), in particular when at least one condition is present.

18. Method according to one of the preceding claims, **characterized in that** a flushing operation, in which a maximum delivery flow ($Q_{max}$) is set at the pump (2), is carried out when, with a specific delivery flow, a previously defined reference energy consumption, in particular a specific reference current or reference power consumption of the pump (2) is exceeded by a specific value.

19. Method according to one of the preceding claims, **characterized in that** the inflow ($Q_{in}(t_i)$) is calculated from the level changes ($P(t_i)$ - $P(t_{i-1})$) in the pump sump (3) and the delivery flow ($Q_{out}(t_i)$) from the pump (2).

**Revendications**

1. Procédé de mise en fonctionnement d'une station de pompage (1), notamment d'une station de pompage des eaux usées, comprenant un puisard de pompe (3) comportant au moins une conduite d'amenée (4) et au moins une conduite d'évacuation (5) et au moins une pompe à vitesse réglable (2) disposée dans ledit puisard de pompe (3), dans lequel

   - la quantité d'eau délivrée au cours d'une période courante par l'intermédiaire de la conduite d'amenée (4) dans le puisard de pompe (3) par unité de temps ($Q_{in}(t_i)$) est déterminée et est stockée dans une mémoire de données (10) en tant que valeur de débit d'amenée,
   - des valeurs de référence sont déterminées à partir des valeurs de débit d'amenée stockées en mémoire, lesquelles valeurs de référence définissent une courbe de référence (R) comprenant une période d'optimisation ($T_{opt}$) future en tant que pronostic de débit d'amenée d'eau à attendre ($Q_{in}(t_i)$, $t_i \geq t_0$) dans le puisard de pompe (2), **caractérisé en ce que**
   - au moins un premier réglage de vitesse de rotation ($n(t_0)$) de la pompe (2) est déterminée pour la période d'optimisation ($T_{opt}$) au moyen d'un procédé d'optimisation numérique, lequel réglage est optimal du point de vue d'au moins une grandeur d'optimisation déterminée ($E_i$) et d'au moins une cible d'optimisation liée à celle-ci à partir du niveau d'eau instantanée ($P(t_0)$) dans le puisard de pompe (3) et du débit d'amenée pronostiqué ($Q_{in}(t_i)$, $t_i \geq t_0$) au cours de la période d'optimisation ($T_{opt}$) pour atteindre un niveau d'eau intermédiaire ($P(t_0 + i \cdot \Delta t_i)$) ou un niveau d'eau final ($P(t_0 + T_{opt})$) dans ou à la fin de la période d'optimisation ($T_{opt}$), et
   - la pompe (2) est mise en fonctionnement avec le réglage de vitesse de rotation ($n(t_0)$) déterminé.

2. Procédé selon la revendication 1, **caractérisé en ce que** le stockage en mémoire des valeurs de débit d'amenée s'effectue de manière journalière et/ou de manière hebdomadaire.

3. Procédé selon la revendication 2, **caractérisé en ce que** la courbe de référence (R) est déterminée à partir du jour courant, notamment du jour courant de la semaine, dans lequel les valeurs de débit d'amenée d'un jour comparable sont utilisées en tant que courbe de référence (R), notamment d'un jour de la semaine correspondant au jour courant de la semaine.

4. Procédé selon l'une quelconque des revendications précédentes, **caractérisé en ce que** la courbe de référence (R) est constituée des valeurs de débit d'amenée d'un jour se situant un ou plusieurs jours auparavant ou se situant une ou plusieurs semaines auparavant, notamment quatre semaines ou 52 semaines auparavant, et dont la dénomination est identique à celle du jour courant de la semaine.

5. Procédé selon l'une quelconque des revendications 1 à 3, **caractérisé en ce que** la courbe de référence (R) est constituée à partir de valeurs de débit d'amenée moyennées en un même point dans le temps, notamment à partir d'un certain nombre de jours immédiatement précédents, ou d'un certain nombre de jours de la semaine dont la dénomination est identique ou d'un certain nombre de jours ouvrés consécutifs ou de jours consécutifs de fin de semaine.

6. Procédé selon l'une quelconque des revendications 1 à 3, **caractérisé en ce que** la courbe de référence (R) est constituée d'une moyenne pondérée à partir

- d'une part, des valeurs de débit d'amenée d'un jour déterminé se situant un ou plusieurs jours auparavant ou se situant une ou plusieurs semaines auparavant et dont la dénomination est identique à celle du jour courant de la semaine, et
- d'autre part, des valeurs de débit d'amenée moyennées en un même point dans le temps de plusieurs jours, notamment d'un certain nombre de jours immédiatement précédents ou d'un certain nombre de jours de la semaine dont la dénomination est identique ou d'un certain nombre de jours ouvrés consécutifs ou de jours consécutifs de fin de semaine.

7. Procédé selon l'une quelconque des revendications précédentes, **caractérisé en ce que** la courbe de référence couvre un intervalle de temps de 24 heures.

8. Procédé selon la revendication 7, **caractérisé en ce que** la période de 24 heures commence à 0 heure du jour présent et **en ce que** les valeurs de référence de la courbe de référence (R), qui correspondent déjà à leur point respectif dans le temps sur la courbe de référence (R) lors du jour courant, sont comparées auxdites valeurs de débit d'amenée, dans lequel une correction de la courbe de référence est effectuée lorsqu'un écart se produit.

9. Procédé selon l'une quelconque des revendications précédentes, **caractérisé en ce que** la détermination des quantités d'eau introduites dans le puisard de pompe (3) par l'intermédiaire de la conduite d'amenée (4) par unité de temps ($Q_{in}(t_i)$) est effectuée sur une période de 24 heures entre 0 heure et 24 heures et se poursuit pendant l'utilisation du procédé d'optimisation.

10. Procédé selon l'une quelconque des revendications précédentes, **caractérisé en ce que** les valeurs de débit d'amenée sont stockées en mémoire sous la forme d'un enregistrement de données journalier et/ou se rapportant au jour de la semaine ou sous la forme d'une série de données sans fin.

11. Procédé selon l'une quelconque des revendications précédentes, **caractérisé en ce que** le principe d'optimalité de Bellman est utilisé en tant que procédé d'optimisation pour l'optimisation dynamique, dans lequel l'évolution de la vitesse de rotation ($n(t_i)$) optimale est calculée de manière à minimiser la consommation d'énergie ($E_i$) de la pompe (2).

12. Procédé selon la revendication 11, **caractérisé en ce que** l'utilisation du procédé d'optimisation s'effectue en divisant la période d'optimisation ($T_{opt}$) en une pluralité de pas temporels ($t_i$) et **en ce qu'**on détermine, pour chaque pas temporel ($t_i$), les niveaux d'eau intermédiaires discrets ($P_x(t_i)$) dans le puisard de pompe (3) lors de ce pas temporel ($t_i$) qui peuvent être atteints par utilisation de la pompe (2) en tenant compte du débit d'amenée d'eau pronostiqué ($Q_{in}(t_i)$), dans lequel, pour toutes les transitions des niveaux d'eau ($P_x(t_i)$) d'un pas temporel ($t_i$) au pas temporel suivant ($t_{i+1}$), une consommation d'énergie moyenne ($E_i$) est calculée et **en ce que** le trajet du niveau d'eau ($P_A(t_0)$) au premier pas temporel ($t_0$) jusqu'à un niveau d'eau final ($P_E(t_n)$), au dernier pas temporel ($t_n$) de la période d'optimisation ($T_{opt}$), qui présente la consommation d'énergie la plus faible ($E_{min}$) est ensuite déterminée, et **en ce que** la vitesse de rotation ($n(t_0)$) de la pompe (2) est réglée pour l'intervalle de temps courant ($t_0$) de manière à ce que le niveau d'eau ($P_x(t_1)$) de l'intervalle de temps suivant ($t_1$) et se situant sur le trajet identifié, soit atteint.

13. Procédé selon la revendication 12, **caractérisé en ce que** la détermination de la consommation d'énergie ($E_i$) s'effectue au moyen d'une fonction de coût.

14. Procédé selon l'une quelconque des revendications précédentes, **caractérisé en ce que** le procédé d'optimisation est répété à certains intervalles de temps, notamment après que la période d'optimisation ($T_{opt}$) se soit écoulée et/ou pour chaque pas temporel ($t_i$).

15. Procédé selon l'une quelconque des revendications 12 à 14, **caractérisé en ce que**, pour la détermination des niveaux d'eau intermédiaires ($P_x(t_i)$) pouvant être atteints, on tient compte d'une condition secondaire, notamment d'un niveau maximal ($P_{max}$) et/ou d'un niveau minimal ($P_{min}$), d'un débit d'alimentation maximal ($Q_{out,max}$) et/ou d'un débit d'alimentation minimal ($Q_{out,min}$), et/ou d'une vitesse de rotation maximale ($n_{max}$) de l'appareil de pompage.

16. Procédé selon l'une quelconque des revendications précédentes, **caractérisé en ce que** le puisard de pompe (3) est vidé à certains intervalles de temps, de préférence de manière régulière, jusqu'à un niveau minimal ($P_{min}$),

notamment lorsqu'au moins une condition est satisfaite.

**17.** Procédé selon l'une quelconque des revendications précédentes, **caractérisé en ce qu'**un processus de rinçage est effectué à certains intervalles de temps, lors duquel un débit d'alimentation maximal ($Q_{max}$) est réglé sur la pompe (2), notamment lorsqu'au moins une condition est satisfaite.

**18.** Procédé selon l'une quelconque des revendications précédentes, **caractérisé en ce qu'**un processus de rinçage lors duquel un débit d'alimentation maximal ($Q_{max}$) est réglé sur la pompe (2) n'est effectué, pour un débit d'alimentation déterminé, que lorsqu'une consommation d'énergie de référence prédéfinié, notamment un appel de courant de référence ou de puissance de référence de la pompe (2), est dépassée d'une valeur déterminée.

**19.** Procédé selon l'une quelconque des revendications précédentes, **caractérisé en ce que** le débit d'amenée ($Q_{in}(t_i)$) est calculé à partir des variations de niveau ($P(t_i) - P(t_{i-1})$) dans le puisard de pompe (3) et du débit d'alimentation ($Q_{out}(t_i)$) de la pompe (2).

Fig. 1

Fig. 2

Fig. 3

Fig. 4a

Fig. 4b

EP 2 796 724 B1

Fig. 4c

Fig. 4d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005088134 A1
- US 5742500 A